# EUROPEAN PATENT SPECIFICATION

(11) **EP 4 224 388 B1**
(45) Date of publication and mention of the grant of the patent: **28.10.2026**
(21) Application number: 23153136.9
(22) Date of filing: 24.01.2023
(51) Int. Cl.: G06Q 10/0631, G06Q 50/06, H02J 3/46

(54) **ENERGY MANAGEMENT APPARATUS, ENERGY MANAGEMENT SYSTEM, ENERGY MANAGEMENT METHOD AND COMPUTER PROGRAM**
ENERGIEVERWALTUNGSVORRICHTUNG, ENERGIEVERWALTUNGSSYSTEM, ENERGIEVERWALTUNGSVERFAHREN UND COMPUTERPROGRAMM
APPAREIL DE GESTION D'ÉNERGIE, SYSTÈME DE GESTION D'ÉNERGIE, PROCÉDÉ DE GESTION D'ÉNERGIE ET PROGRAMME INFORMATIQUE

(30) Priority: 02.02.2022 JP 2022014807
(43) Date of publication of application: 09.08.2023
(73) Proprietor: Kabushiki Kaisha Toyota Chuo Kenkyusho, Nagakute-shi, Aichi-ken 480-1192 (JP)
(72) Inventor: KUNITOMI, Seiichi, Nagakute-shi, 480-1192 (JP); YAMAMOTO, Seiji, Nagakute-shi, 480-1192 (JP); MATSUO, Hidehito, Nagakute-shi, 480-1192 (JP); ISHIKAWA, Hiroyuki, Nagakute-shi, 480-1192 (JP); KOMATSUBARA, Atsuo, Nagakute-shi, 480-1192 (JP)
(74) Representative: Kramer Barske Schmidtchen Patentanwälte PartG mbB

(56) References cited:
- EP-A1- 3 306 769
- EP-A1- 3 441 920
- EP-A1- 3 869 656
- GB-A- 2 506 401
- JP-A- 2015 035 941
- US-A1- 2017 045 904

## Description

### Technical Field

The present disclosure relates to an energy management apparatus, an energy management system, an energy management method, and a computer program.

### Background

An energy management apparatus has conventionally been known to manage the energies of a plurality of object of management. In general, the energy management apparatus creates an operation pattern for each object of management according to an energy interchange plan for a plurality of objects of management and outputs a command to each of the plurality of objects of management, so as to manage interchange of energy between the objects of management (as described in, for example, Patent Literatures 1 and 2). EP 3 441 920 A1 discloses an operation planning system including a demand information database and a plurality of planning units.

### Citation List

### Patent Literature

Patent Literature 1: JP 2015-35941A
Patent Literature 2: JP 2016-42478A

### Summary

### Technical Problem

The load of management of the energy management apparatus, however, increases with an increase in the number of objects of management. It is accordingly difficult for the energy management apparatus to output information with regard to a suitable operation pattern to each of the plurality of objects of management. This may cause a failure in optimum operation at the level of each object of management.

In order to solve the problem described above, an object of the present disclosure is to provide a technique applied to an energy management apparatus to reduce the load of the energy management apparatus and to assure optimum operation at the level of each object of management.

### Solution to Problem

With a view to solving at least part of the problem described above, the present disclosure may be implemented by aspects described below.
(1) According to one aspect, there is provided an energy management apparatus according to claim 1.

The energy management apparatus of this aspect gives the command with regard to the control time of the object of management and the amount of energy interchange in the control time, to the object of management. The amount of energy interchange herein denotes an amount of change in energy, for example, storage, conversion, consumption, and transfer of energy in the object of management. The object of management determines an operation pattern such as to fit the control time and the amount of energy interchange in the control time given as the command from the energy management apparatus. Compared with the configuration that the energy management apparatus determines the operation pattern of the object of management, this configuration reduces the load of the energy management apparatus. Furthermore, the object of management is allowed to determine the own optimum operation pattern within such a range as to meet the control time and the amount of energy interchange in the control time given as the command from the energy management apparatus. This assures optimum operation at the level of each object of management.

The energy management apparatus of this aspect determines the control time and the amount of energy interchange by using the information with regard to the state of operation of the object of management and the operation plan of the object of management. This configuration enables an energy interchange plan to be prepared by taking into account the state of operation of the object of management and determines the control time and the amount of energy interchange.

In the energy management apparatus of this aspect, the command portion determines the control time and the amount of energy interchange of the energy conversion device by using the information with regard to the respective amounts of energy in the upstream-side energy storage device and the downstream-side energy storage device connected with the energy conversion device as the object of management. This configuration allows for energy interchange according to the actual state of the energy storage device and thereby suppresses the occurrence of deficiency or excess of energy in the energy storage device.

In the energy management apparatus of this aspect, the command portion determines the control time of the energy conversion device by using the difference between the estimated input-output and the actual input-output of the energy storage device, in addition to the differences between the current amount of energy storage and the upper limit value and the lower limit value of the amount of energy storage in the energy storage device. This configuration enables the control time suitable for each device to be set by taking into account the difference between the estimated input-output and the actual input-output and thereby further suppresses the occurrence of deficiency or excess of energy in the energy storage device.

(2) In the energy management apparatus of the above aspect, the object of management may be a unit including a plurality of energy storage devices. The information obtaining portion may obtain information with regard to differences between a current amount of energy storage and an upper limit value and a lower limit value of an amount of energy storage in a specific energy storage device among the plurality of energy storage devices and with regard to differences between a current amount of energy storage and an upper limit value and a lower limit value of an amount of energy storage in an energy storage device connected with the specific energy storage device. The command portion may determine a control time of the specific energy storage device and an amount of energy interchange in the specific energy storage device, based on the information with regard to the differences obtained by the information obtaining portion. In the energy management apparatus of this aspect, the command portion determines the control time and the amount of energy interchange of the specific energy storage device among the plurality of energy storage devices as the objects of management by using the information with regard to the amount of energy of the energy storage device connected with the specific energy storage device. The "specific energy storage device" herein denotes a device having an energy storage function. For example, a storage battery corresponds to the "specific energy storage device", while a gas tank or the like does not correspond to the "specific energy storage device". This configuration allows for energy interchange according to the actual state of the energy storage device and thereby suppresses the occurrence of deficiency or excess of energy in the energy storage device.

(3) In the energy management apparatus of the above aspect, the command portion may use Expression (2) to determine a control time tₕ of the specific energy storage device:
[Math. 5] ${t}_{h} = Min \left(\begin{matrix}Min \left(\frac{{E}_{max - γ} - {E}_{now - γ}}{{P}_{er - γ}}, \frac{{E}_{now - γ} - {E}_{min - γ}}{{P}_{er - γ}}\right) \\ , Min \left({\sum }_{i = 1}^{{n}_{i}} \left(\frac{{E}_{max - δ _ i} - {E}_{now - δ _ i}}{{P}_{er - δ _ i}}\right) , {\sum }_{i = 1}^{{n}_{i}} \left(\frac{{E}_{now - δ _ i} - {E}_{min - δ _ i}}{{P}_{er - δ _ i}}\right)\right)\end{matrix}\right)$ (2)

In Expression (2), tₕ denotes a control time (s) of a specific energy storage device, E_{max-γ} denotes an upper limit amount of energy storage (Wh) of the specific energy storage device, E_{min-γ} denotes a lower limit amount of energy storage (Wh) of the specific energy storage device, E_{now-γ} denotes a current amount of energy storage (Wh) of the specific energy storage device, P_{er-γ} denotes a difference between an estimated input-output and an actual input-output (W) of the specific energy storage device, E_{max-δ_i} denotes an upper limit amount of energy storage (Wh) of an i-th energy storage device connected with the specific energy storage device, E_{min-δ_i} denotes a lower limit amount of energy storage (Wh) of the i-th energy storage device connected with the specific energy storage device, E_{now-δ_i} denotes a current amount of energy storage (Wh) of the i-th energy storage device connected with the specific energy storage device, P_{er-δ_i} denotes a difference between an estimated input-output and an actual input-output (W) of the i-th energy storage device connected with the specific energy storage device, i is an integer of not smaller than 1, and nᵢ denotes a number of energy storage devices connected with the specific energy storage device. In the energy management apparatus of this aspect, the command portion determines the control time of the specific energy storage device by using the difference between the estimated input-output and the actual input-output of the energy storage device, in addition to the differences between the current amount of energy storage and the upper limit value and the lower limit value of the amount of energy storage of the energy storage device. This configuration enables the control time suitable for each device to be set by taking into account the difference between the estimated input-output and the actual input-output and thereby further suppresses the occurrence of deficiency or excess of energy in the energy storage device.

(4) In the energy management apparatus of the above aspect, the command portion may use Expression (3) to determine an amount of energy interchange E in the object of management:
[Math. 6] $E = {\int }_{{t}_{now}}^{{t}_{now + {t}_{h}}} {P}_{op _ ε} dt$ (3)

In Expression (3), t_{now} denotes a current time (s), tₕ denotes a control time (s) of the object of management, and P_{op_ε} denotes an operation plan output value (W) of the object of management. In the energy management apparatus of this aspect, the command portion calculates the amount of energy interchange by integration of the operation plan output value of the object of management in the control time. This indicates that the amount of energy interchange in the control time with regard to the object of management is required to meet Expression (3). The object of management enables an operation pattern thereof to be freely set within such a range as to meet Expression (3). This enables the object of management to determine the own optimum operation pattern and thereby assures optimum operation at the level of each object of management.

(5) When the control time is not longer than a predetermined value, the energy management apparatus of the above aspect may stop giving the command with regard to the control time and the amount of energy interchange, to the object of management. The energy management apparatus of this aspect stops the output of the control time and the amount of energy interchange to the object of management, when the determined control time becomes too short. The energy management apparatus of this configuration may output, for example, a predetermined amount of energy interchange at every unit time to the object of management, so as to suppress the operation of the object of management from becoming unstable.

(6) According to another aspect of the present disclosure, there is provided an energy management system according to claim 6. This energy management system comprises a device energy management apparatus configured to give a command with regard to a control time of one or more devices and an amount of energy interchange in the control time, to the one or more devices; and a unit energy management apparatus configured to manage energy of a unit including the one or more devices and the device energy management apparatus and configured to give a command with regard to a control time of the unit and an amount of energy interchange in the control time, to the device energy management apparatus. In the energy management system of this aspect, the unit energy management apparatus manages the energy of the unit including one or more devices and the device energy management apparatus configured to manage the energy of the device. The device energy management apparatus included in the unit is configured to manage the energy of the device included in the unit. Such a hierarchical arrangement of the unit energy management apparatus and the device energy management apparatus relative to the device enables the load of managing the energies of a relatively large number of devices to be shared by the unit energy management apparatus and the device energy management apparatus. This assures optimum operation at the level of each object of management.

(7) According to another aspect of the present disclosure, there is provided an energy management method of causing energy of an object of management to be managed by an energy management apparatus according to claim 7. This energy management method comprises giving a command with regard to a control time of the object of management and an amount of energy interchange in the control time, to the object of management. The object of management is one or more devices or one or more units comprising a plurality of devices and another energy management apparatus configured to manage energies of the plurality of devices. The energy management method of this aspect includes a process of giving the command with regard to the control time of the object of management and the amount of energy interchange in the control time, to the object of management. The object of management is allowed to determine an operation pattern such as to fit the control time and the amount of energy interchange in the control time given as the command. Compared with the configuration that the energy management apparatus determines the operation pattern of the object of management, this configuration reduces the load of the energy management apparatus. Furthermore, the object of management is allowed to determine the own optimum operation pattern within such a range as to meet the control time and the amount of energy interchange in the control time given as the command. This assures optimum operation at the level of each object of management.

(8) According to another aspect of the present disclosure, there is provided a computer program that causes a computer to manage energy of an object of management according to claim 8. This computer program causes the computer to perform a function of giving a command with regard to a control time of the object of management and an amount of energy interchange in the control time, to the object of management. The object of management is one or more devices or one or more units comprising a plurality of devices and another energy management apparatus configured to manage energies of the plurality of devices. The computer program of this aspect causes the computer to perform the function of giving the command with regard to the control time of the object of management and the amount of energy interchange in the control time, to the object of management. Compared with the configuration that the energy management apparatus determines an operation pattern of the object of management, this configuration reduces the load of the energy management apparatus. Furthermore, the object of management is allowed to determine the own optimum operation pattern within such a range as to meet the control time and the amount of energy interchange in the control time given as the command. This assures optimum operation at the level of each object of management.

The present disclosure may be implemented by a variety of aspects, for example, a control method of an object of management including an energy management system, a server apparatus configured to deliver a computer program for management of energy in an object of management, and a non-transitory storage medium that stores the computer program therein.

### Brief Description of Drawings

Fig. 1 is a schematic diagram illustrating a factory under management of an energy management system according to a first embodiment;
Fig. 2 is a first schematic diagram illustrating the configuration of the energy management system according to the first embodiment;
Fig. 3 is a second schematic diagram illustrating the configuration of the energy management system according to the first embodiment;
Fig. 4 is an explanatory diagram illustrating objects of management of an energy management system according to a second embodiment;
Fig. 5 is a schematic diagram illustrating the configuration of the energy management system according to the second embodiment;
Fig. 6 is a diagram illustrating a time change in operation plan output value of a water electrolysis device;
Fig. 7 is a schematic diagram illustrating the configuration of an energy management system according to a third embodiment;
Fig. 8 is an explanatory diagram illustrating objects of management of an energy management system according to a fourth embodiment;
Fig. 9 is a schematic diagram illustrating the configuration of the energy management system according to the fourth embodiment;
Fig. 10 is an explanatory diagram illustrating objects of management of an energy management system according to a fifth embodiment;
Fig. 11 is a schematic diagram illustrating the configuration of the energy management system according to the fifth embodiment; and
Fig. 12 is a schematic diagram illustrating a modification of the energy management system of the first embodiment.

### Description of Embodiments

### <First Embodiment>

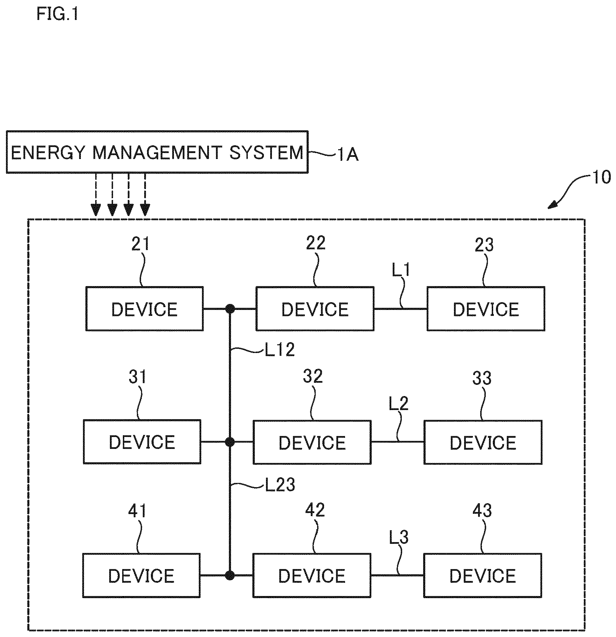

Fig. 1 is a schematic diagram illustrating a factory under management of an energy management system according to a first embodiment. An energy management system 1A of this embodiment is applicable to a factory 10 provided with a plurality of devices 21, 22, 23, 31, 32, 33, 41, 42 and 43 as shown in Fig. 1. The plurality of devices 21, 22, 23, 31, 32, 33, 41, 42 and 43 are respectively connected with one another by energy lines L1, L2, L3, L12 and L23 to allow for energy interchange between the devices. The "energy" of the embodiment is not limited to electric power, heat or the like but also includes hydrogen gas, methane gas and the like that generate energy through chemical reactions.

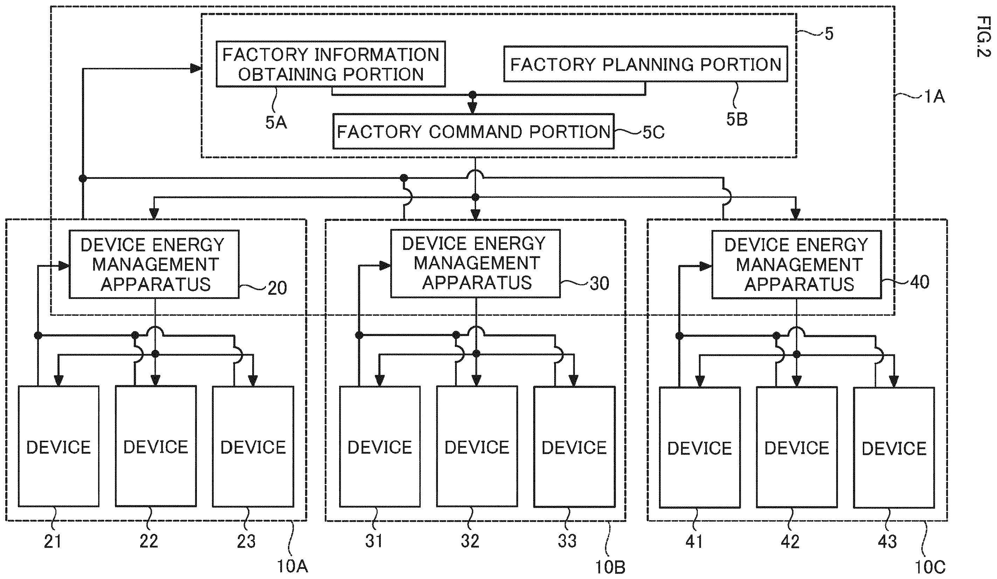

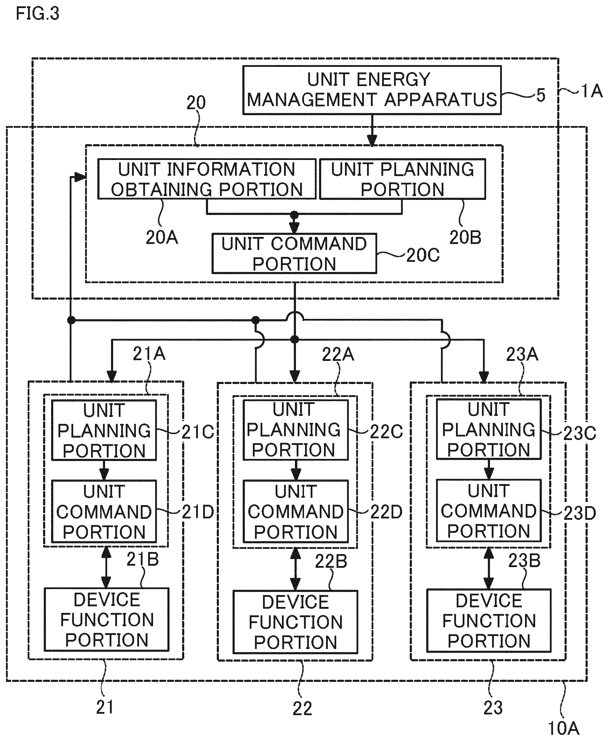

Fig. 2 is a first schematic diagram illustrating the configuration of the energy management system according to this embodiment. Fig. 3 is a second schematic diagram illustrating the configuration of the energy management system according to this embodiment. The energy management system 1A includes a unit energy management apparatus 5 and a plurality of device energy management apparatuses 20, 30 and 40. The energy management system 1A checks the individual states of energy supply and demand of the plurality of devices 21, 22, 23, 31, 32, 33, 41, 42 and 43 provided in the factory 10and manages the amounts of energy interchange between the plurality of devices 21, 22, 23, 31, 32, 33, 41, 42 and 43.

According to the embodiment, each of the plurality of device energy management apparatuses 20, 30 and 40 and the plurality of devices 21, 22, 23, 31, 32, 33, 41, 42 and 43 belongs to one of three units 10A, 10B and 10C provided in the factory 10. The unit 10A includes the devices 21, 22, and 23 and the device energy management apparatus 20 configured to manage the energies of the devices 21, 22 and 23. The unit 10B includes the devices 31, 32 and 33 and the device energy management apparatus 30 configured to manage the energies of the devices 31, 32 and 33. The unit 10C includes the devices 41, 42 and 43 and the device energy management apparatus 40 configured to manage the energies of the devices 41, 42 and 43.

The unit energy management apparatus 5 collects information with regard to energy, for example, supply and demand amounts and storage amounts of energy in the respective units 10A, 10B and 10C. The unit energy management apparatus 5 outputs commands for the respective units 10A, 10B and 10C to the respective device energy management apparatuses 20, 30 and 40, based on energy interchange plans of the units 10A, 10B and 10C that are prepared to meet an operation plan of the entire factory 10. The unit energy management apparatus 5 includes a factory information obtaining portion 5A, a factory planning portion 5B, and a factory command portion 5C.

The factory information obtaining portion 5A is electrically connected with each of the plurality of the device energy management apparatuses 20, 30 and 40. The factory information obtaining portion 5A obtains information with regard to the energies of the respective units 10A, 10B, and 10C.

The factory planning portion 5B prepares energy interchange plans of the respective units 10A, 10B and 10C, such as to meet the operation plan of the entire factory 10, based on the information obtained by the factory information obtaining portion 5A. The factory planning portion 5B accordingly obtains the energy interchange plans of the respective units 10A, 10B and 10C.

The factory command portion 5C uses the information with regard to the energies of the respective units 10A, 10B and 10C obtained by the factory information obtaining portion 5A and the energy interchange plans between the units obtained by the factory planning portion 5B to determine the contents of the commands that are to be given to the units 10A, 10B and 10C. According to the embodiment, the contents of the commands to be determined include control times of the respective units 10A, 10B and 10C and information with regard to the amounts of energy interchange that are to be interchanged between the units. The amount of energy interchange herein denotes an amount of change in energy, for example, storage, conversion, consumption, and transfer of energy in an object of management. The contents of the commands to be determined by the factory command portion 5C are output from the factory command portion 5C to each of the plurality of device energy management apparatuses 20, 30 and 40. According to the embodiment, the command including the control time and the amount of energy interchange is given to each of all the units 10A, 10B and 10C. It is, however, not necessary to give such commands to all the units. For example, commands including the respective control times and amounts of energy interchange may be given to the units 10A and 10B, while a command including an amount of energy transfer per unit time may be given to only the unit 10C.

Each of the plurality of device energy management apparatuses 20, 30 and 40 is electrically connected with the unit energy management apparatus 5. The device energy management apparatus 20 is electrically connected with the devices 21, 22 and 23. The device energy management apparatus 30 is electrically connected with the devices 31, 32 and 33. The device energy management apparatus 40 is electrically connected with the devices 41, 42 and 43. Each of the device energy management apparatus 20, 30 and 40 includes a unit information obtaining portion, a unit planning portion, and a unit command portion. The following describes the functions of a unit information obtaining portion 20A, a unit planning portion 20B and a unit command portion 20C included in the device energy management apparatus 20 with reference to Fig. 3. The device energy management apparatuses 30 and 40 have similar configurations and functions.

The unit information obtaining portion 20A is electrically connected with the respective devices 21, 22 and 23. The unit information obtaining portion 20A obtains information with regard to the states of operations and the states of energy of the respective devices 21, 22 and 23.

The unit planning portion 20B is electrically connected with the unit energy management apparatus 5. A control time of the unit 10A and an amount of energy interchange in the control time are input from the unit energy management apparatus 5 into the unit planning portion 20B.

The unit command portion 20C is electrically connected with the unit information obtaining portion 20A and the unit planning portion 20B. The unit command portion 20C uses the information with regard to the respective states of operations and the respective states of energy of the plurality of devices 21, 22 and 23 obtained by the unit information obtaining portion 20A and the contents of the commands input from the unit energy management apparatus 5 via the unit planning portion 20B to determine the respective control times of the plurality of devices 21, 22 and 23 and the amounts of energy interchange that are respectively allocated to the plurality of devices 21, 22 and 23. The unit command portion 20C gives commands that include the respective control times and the respective amounts of energy interchange of the plurality of devices 21, 22 and 23, to the plurality of devices 21, 22 and 23.

Each of the plurality of devices 21, 22, 23, 31, 32, 33, 41, 42 and 43 includes a device controller and a device function portion. The following describes the functions of device controllers 21A, 22A and 23A and device function portions 21B, 22B and 23B of the respective devices 21, 22 and 23 included in the unit 10A with reference to Fig. 3. The plurality of devices 31, 32, 33, 41, 42 and 43 have similar configurations.

Each of the device controllers 21A, 22A and 23A includes a device planning portion 21C, 22C or 23C and a device command portion 21D, 22D or 23D. The device planning portion 21C determines an optimum operation pattern (output plan) for the device 21 within such a range as to meet the control time and the amount of energy interchange of the device 21 output from the unit command portion 20C. The optimum operation pattern herein may be, for example, an operation pattern that takes into account the efficiency of operation and the durability of the device 21. The device command portion 21D controls the device function portion 21B according to the operation pattern determined by the device planning portion 21C. The device planning portion 22C determines an optimum operation pattern (output plan) for the device 22 within such a range as to meet the control time and the amount of energy interchange of the device 22 output from the unit command portion 20C. As in the case of the device 21, the optimum operation pattern herein may be, for example, an operation pattern that takes into account the efficiency of operation and the durability of the device 22. The device command portion 22D controls the device function portion 22B according to the operation pattern determined by the device planning portion 22C. The device planning portion 23C determines an optimum operation pattern (output plan) for the device 23 within such a range as to meet the control time and the amount of energy interchange of the device 23 output from the unit command portion 20C. As in the case of the device 21, the optimum operation pattern herein may be, for example, an operation pattern that takes into account the efficiency of operation and the durability of the device 23. The device command portion 23D controls the device function portion 23B according to the operation pattern determined by the device planning portion 23C.

Each of the device function portions 21B, 22B and 23B exerts functions characteristic of the respective devices 21, 22 and 23. For example, when the device is a storage battery, the device function portion may be an electric power storing part including cells. In another example, when the device is a generator, the device function portion may be an electric power generating part. The respective device function portions 21B, 22B and 23B are electrically connected with the respective device command portions 21D, 22D and 23D and exert the respective functions according to the operation patterns respectively output from the device command portions 21D, 22D and 23D.

In the energy management system 1A of the embodiment described above, the unit energy management apparatus 5 gives the commands including the respective control times of the units 10A, 10B and 10C and the amounts of energy interchange between the units 10A, 10B and 10C in the respective control times, to the plurality of units 10A, 10B and 10C. Each of the plurality of units 10A, 10B and 10C determines the operation pattern such as to meet the control time and the amount of energy interchange in the control time given as the command from the unit energy management apparatus 5. Compared with the configuration that the unit energy management apparatus 5 determines the respective operation patterns of the units 10A, 10B and 10C, this configuration reduces the load of the unit energy management apparatus 5. Furthermore, each of the units 10A, 10B and 10C is allowed to determine the own optimum operation pattern within such a range as to meet the control time and the amount of energy interchange in the control time given as the command from the unit energy management apparatus 5. This assures the optimum operation at the level of each of the units 10A, 10B and 10C.

Moreover, in the energy management system 1A of the embodiment, the unit energy management apparatus 5 includes the factory information obtaining portion 5A configured to obtain the information with regard to the energies of the respective device energy management apparatuses 20, 30 and 40. This configuration enables the unit energy management apparatus 5 to determine the control times and the amounts of energy interchange by using the information with regard to the respective states of operations of the plurality of units 10A, 10B and 10C and an operation plan of the object of management. The unit energy management apparatus 5 is thus allowed to prepare the energy interchange plans by taking into account the respective states of operations of the plurality of units 10A, 10B and 10C and to give the commands including the control times and the amounts of energy interchange to the respective units 10A, 10B and 10C.

Furthermore, in the energy management system 1A of the embodiment, the device energy management apparatus 20 in the unit 10A gives the commands including the control times of the respective devices 21, 22 and 23 and the amounts of energy interchange of the devices 21, 22 and 23 in the control times, to the plurality of devices 21, 22 and 23. The plurality of devices 21, 22 and 23 respectively determine the operation patterns according to the control times and the amounts of energy interchange in the control times given as the commands from the device energy management apparatus 20. The same applies to the unit 10B and the unit 10C. Compared with the configuration that the device energy management apparatus 20 determines the operation patterns of the respective devices 21, 22 and 23, this configuration reduces the load of the device energy management apparatus 20 in the unit 10A. Furthermore, each of the devices 21, 22 and 23 is allowed to determine the own optimum operation pattern within such a range as to meet the control time and the amount of energy interchange in the control time given as the command from the device energy management apparatus 20. This assures the optimum operation at the level of each of the devices 21, 22 and 23. The device energy management apparatus 30 included in the unit 10B and the device energy management apparatus 40 included in the unit 10C have similar advantageous effects to those described above.

Moreover, in the energy management system 1A of the embodiment, the unit energy management apparatus 5 configured to manage the energies of the respective units 10A, 10B and 10C and the device energy management apparatuses 20, 30 and 40 configured to manage the energies of the plurality of devices included in each of the units are arranged in a hierarchical manner. This configuration enables the load for managing the energies of a relatively large number of devices to be shared by the unit energy management apparatus 5 and the plurality of device energy management apparatuses 20, 30 and 40 and also assures the optimum operation at the level of the individual device.

An energy management method of this embodiment includes a process of giving commands including respective control times of the plurality of units 10A, 10B and 10C and amounts of energy interchange in the control times, to the plurality of units 10A, 10B and 10C. Each of the plurality of units 10A, 10B and 10C is allowed to determine the operation pattern such as to meet the control time and the amount of energy interchange in the control time given as the command. Compared with the configuration that the unit energy management apparatus 5 determines the respective operation patterns of the plurality of units 10A, 10B and 10C, this configuration reduces the load of the unit energy management apparatus 5. Furthermore, each of the units 10A, 10B and 10C is allowed to determine the own optimum operation pattern within such a range as to meet the control time and the amount of energy interchange in the control time given as the command. This assures the optimum operation at the level of each of the units 10A, 10B and 10C.

### <Second Embodiment>

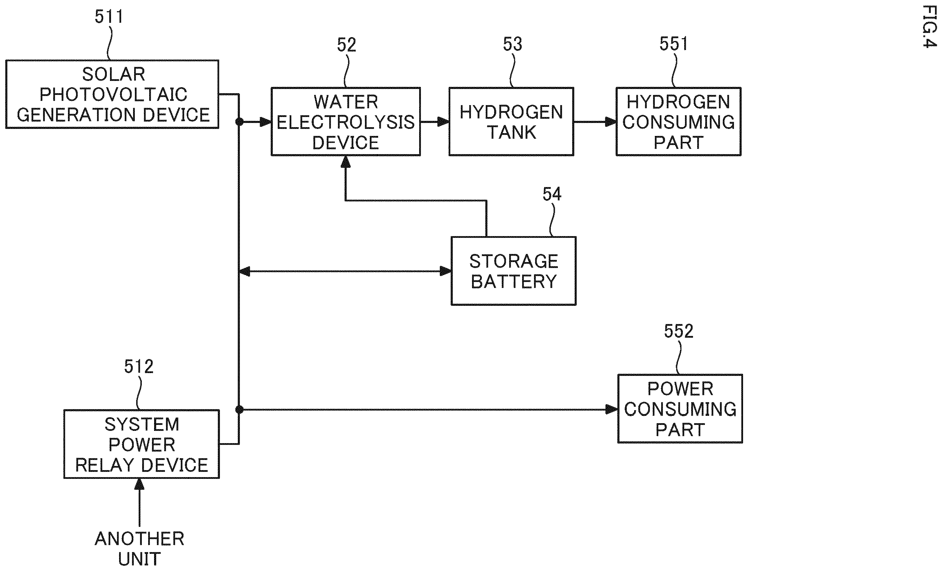

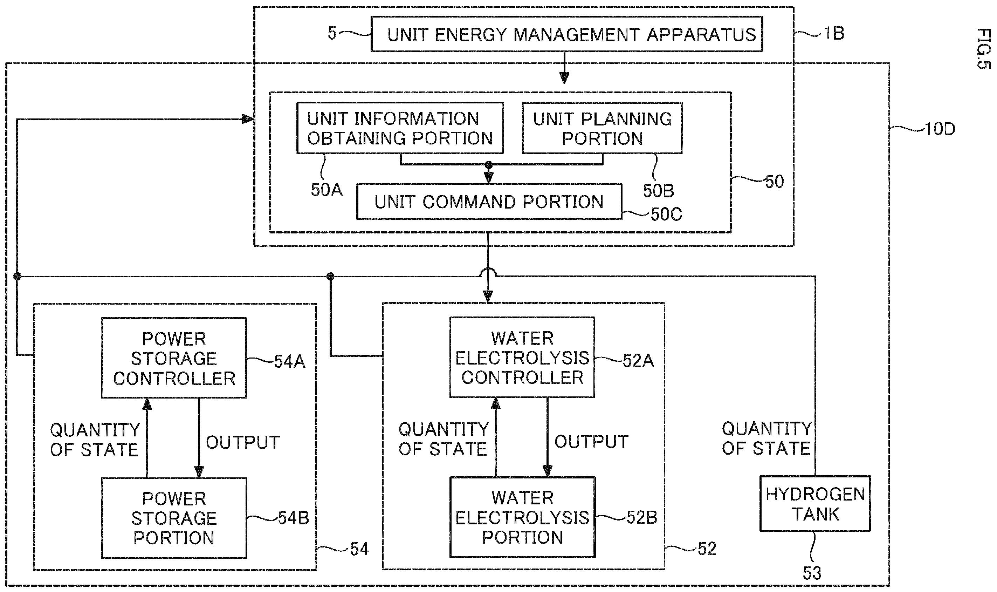

Fig. 4 is a schematic diagram illustrating objects of management of an energy management system according to a second embodiment. Fig. 5 is a schematic diagram illustrating the configuration of the energy management system according to the second embodiment. An energy management system 1B of the second embodiment is applied to a factory 10 provided with a unit 10D including a water electrolysis device 52, a hydrogen tank 53 and a storage battery 54.

The energy management system 1B includes a unit energy management apparatus 5 and a device energy management apparatus 50 configured to manage the unit 10D (as shown in Fig. 5). The device energy management apparatus 50 has a similar configuration and similar functions to those of the device energy management apparatus 20 of the first embodiment. The energy management system 1B accordingly reduces the load of the unit energy management apparatus 5 while meeting an operation plan of the entire factory 10, and mainly achieves the optimum operation of the water electrolysis device 52. The unit 10D may be regarded as a modification of the unit 10A of the first embodiment.

According to the embodiment, the unit 10D includes a solar photovoltaic generation device 511, a system power relay device 512, a water electrolysis device 52, a hydrogen tank 53, a hydrogen consuming part 551, a storage battery 54 and a power consuming part 552. In the unit 10D, the solar photovoltaic generation device 511 serves as an energy supply source. The electric power supplied from the solar photovoltaic generation device 511 is used for electrolysis of water by the water electrolysis device 52. Hydrogen produced by the electrolysis of water is stored in the hydrogen tank 53. The hydrogen stored in the hydrogen tank 53 is consumed by the hydrogen consuming part 551. The electric power supplied from the solar photovoltaic generation device 511 is stored in the storage battery 54 and is used for the electrolysis of water by the water electrolysis device 52 via the storage battery 54, and is also consumed by the power consuming part 552. Moreover, in the case of shortage of energy in the unit 10D, the system power relay device 512 supplies electric power from another unit into the unit 10D. Among the devices included in the unit 10D, the potential objects of management by the device energy management apparatus 50 are the water electrolysis device 52 and the storage battery 54. According to the embodiment, it is assumed that the device energy management apparatus 50 controls only the water electrolysis device 52, while not giving a command to the storage battery 54. It is also assumed here that the storage battery 54 is operated independently of the device energy management apparatus 50, in order to maintain a system frequency (system voltage in the case of a DC grid).

The device energy management apparatus 50 of this embodiment includes a unit information obtaining portion 50A, a unit planning portion 50B and a unit command portion 50C. As shown in Fig. 5, the unit information obtaining portion 50A is electrically connected with the water electrolysis device 52, the storage battery 54 and the hydrogen tank 53. The unit information obtaining portion 50A obtains information with regard to the respective states of operations and the respective states of energy of the water electrolysis device 52, the storage battery 54 and the hydrogen tank 53.

The unit planning portion 50B is electrically connected with the unit energy management apparatus 5. A control time of the unit 10D and an amount of energy interchange in the control time are input from the unit energy management apparatus 5 into the unit planning portion 50B. The unit planning portion 50B prepares an operation plan of the water electrolysis device 52 by using the information with regard to the respective states of operations and the respective states of energy obtained from a water electrolysis controller 52A and a power storage controller 54A by the unit information obtaining portion 50A, the control time of the unit 10D and the amount of energy interchange in the control time. According to the embodiment, the unit planning portion 50B prepares a plan of the output of the water electrolysis device 52 (the charging and discharging output of the storage battery and the output of water electrolysis) and the amount of energy storage in the storage battery 54 by optimization calculation, for example, for a time period of 24 hours from the planning time in the unit of 0.5 hours. A procedure of the optimization calculation, for example, treats each time as a discrete point and calculates a solution that minimizes the amount of introduction of the system power by the system power relay device 512 by a mixed integer programming method. The execution or non-execution of the optimization, the technique employed for the optimization in the preparation of the operation plan and the unit time in the plan are, however, not limited to these examples.

The unit command portion 50C calculates a control time of the water electrolysis device 52, based on the operation plan prepared by the unit planning portion 50B, and outputs the calculated control time period to the water electrolysis device 52. According to the embodiment, the unit command portion 50C calculates a control time tₕ according to Expression (1) given below:
[Math. 7] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1)

In Expression (1), tₕ denotes a control time (s) of an energy conversion device, E_{max-α_i} denotes an upper limit amount of energy storage (Wh) of an i-th upstream side energy storage device, E_{min-α_i} denotes a lower limit amount of energy storage (Wh) of the i-th upstream side energy storage device, E_{now-α_i} denotes a current amount of energy storage (Wh) of the i-th upstream side energy storage device, P_{er-α_i} denotes a difference between an estimated input-output and an actual input-output (W) into and from the i-th upstream side energy storage device, E_{max-β_j} denotes an upper limit amount of energy storage (Wh) of a j-th downstream side energy storage device, E_{min-β_j} denotes a lower limit amount of energy storage (Wh) of the j-th downstream side energy storage device, E_{now-β_j} denotes a current amount of energy storage (Wh) of the j-th downstream side energy storage device, P_{er-β_j} denotes a difference between an estimated input-output and an actual input-output (W) into and from the j-th downstream side energy storage device, i and j are integers of not smaller than 1, nᵢ denotes the number of upstream side energy storage devices, and nⱼ denotes the number of downstream side energy storage devices.

According to the embodiment, the "upstream side energy storage device" of Expression (1) is the storage battery 54 that is connected with an upstream side of the water electrolysis device 52 in an energy transfer direction, and the "downstream side energy storage device" is the hydrogen tank 53 that is connected with a downstream side of the water electrolysis device 52 in the energy transfer direction. According to the embodiment, one energy storage device is connected with the upstream side and is also connected with the downstream side of the water electrolysis device 52, so that both i and j are equal to 1.

The following describes a concrete example of the calculation of the control time tₕ according to Expression (1) by the unit command portion 50C. As one example of the calculation according to Expression (1), it is assumed that the upper limit and the lower limit of the amount of energy storage in the storage battery 54 are respectively 50 (MWh) and 0 (MWh) and that the upper limit and the lower limit of the amount of energy storage in the hydrogen tank 53 are respectively 100 (MWh) and 0 (MWh). The current amount of energy storage in the storage battery 54 is 10 (MWh), and the current amount of energy storage in the hydrogen tank 53 is 60 (MWh). The difference between the estimated input-output and the actual input-output of the storage battery 54 and the difference between the estimated input-output and the actual input-output of the hydrogen tank 53 are respectively set to 15 (MWh) and 10 (MWh). This difference between the estimated input-output and the actual input-output may be determined by the rule of thumb or may be determined based on a certain estimation model. The control time tₕ is calculated as given below by substituting these numerical values into Expression (1): $\begin{matrix}th = MIN \left(MIN\left(\left(50-10\right)/15, \left(10-0\right)/15\right), MIN\left(\left(100-60\right)/10, \left(60-0\right)/10\right)\right) \\ = Min \left(Min\left(2.67, 0.67\right), Min\left(4.6\right)\right) \\ = 0.67 \left[hour\right]\end{matrix}$

The unit command portion 50C calculates an amount of energy interchange E of the water electrolysis device 52, based on the operation plan prepared by the unit planning portion 50B. The unit command portion 50C calculates the amount of energy interchange E according to Expression (3) given below:
[Math. 8] $E = {\int }_{{t}_{now}}^{{t}_{now + {t}_{h}}} {P}_{op _ ε} dt$ (3)

In Expression (3), t_{now} denotes a current time (s), tₕ denotes the control time (s) of the water electrolysis device 52, and P_{op_ε} denotes an operation plan output value (W) of the water electrolysis device 52.

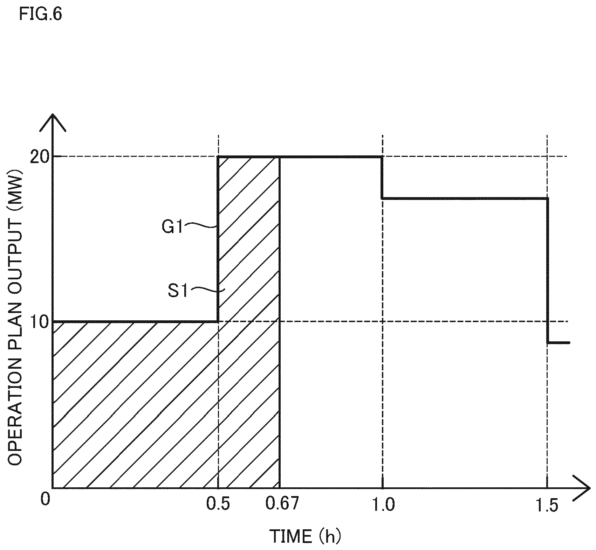

Fig. 6 is a diagram illustrating a time change in the operation plan output value of the water electrolysis device. Fig. 6 shows an operation plan output of the water electrolysis device 52 as one example, based on a demand-supply prediction in the factory 10 as a solid line graph (solid line G1 in Fig. 6). More specifically, when the current time t_{now}= 0, the operation plan output value P_{op_ε} of the water electrolysis device 52 changes in the unit of 0.5 hours as shown in Fig. 6. As shown by Expression (3), the amount of energy interchange E is given by integration from the time t_{now} to a time (t_{now}+tₕ) in the operation plan of the water electrolysis device 52. An area of a hatched portion S1 shown in Fig. 6 thus corresponds to the amount of energy interchange E in the water electrolysis device 52. Accordingly, in the example of Fig. 6, the amount of energy interchange E is calculated as given below: $E = 10 \times 0.5 + 20 \times 0.17 = 8.4 \left(MWh\right)$

The unit command portion 50C calculates the control time tₕ of the water electrolysis device 52 and the amount of energy interchange E in the water electrolysis device 52 as described above. The unit command portion 50C outputs information including the control time tₕ of the water electrolysis device 52 and the amount of energy interchange E in the water electrolysis device 52 to the water electrolysis controller 52A.

The water electrolysis device 52 includes the water electrolysis controller 52A and a water electrolysis portion 52B. The water electrolysis controller 52A controls the water electrolysis portion 52B configured to perform electrolysis of water, in response to a command of the unit command portion 50C. The storage battery 54 includes the power storage controller 54A and a power storage portion 54B. The power storage controller 54A controls the power storage portion 54B configured to perform changing and discharging of electric power, independently of the device energy management apparatus 50.

According to the embodiment, the water electrolysis controller 52A determines an operation pattern such as to generate, for example, an amount of hydrogen corresponding to the amount of energy interchange E= 8.4 (MWh) within the control time tₕ= 0.67 (hours), based on the information including the control time tₕ of the water electrolysis device 52 and the amount of energy interchange E in the water electrolysis device 52 input from the unit command portion 50C. According to the embodiment, the water electrolysis controller 52A determines an optimum operation pattern by taking into account various restrictions, such as the capability and the durability of the water electrolysis device 52, the operation efficiency and the like, within the range of the control time tₕ and the amount of energy interchange E input from the unit command portion 50C. Making the control time tₕ as long as possible increases the flexibility of control by the water electrolysis controller 52A.

The short calculated control time tₕ makes it difficult to update a command in a short time period by the water electrolysis controller 52A. According to the embodiment, when the control time tₕ becomes equal to or shorter than a predetermined value, the device energy management apparatus 50 interrupts the output of the command with regard to the control time tₕ and the amount of energy interchange E and directly outputs a command to the water electrolysis device 52. This predetermined value may be, for example, a time that causes delay of a response of the water electrolysis controller 52A or may be set arbitrarily to a longer time.

In the energy management system 1B of the embodiment described above, the device energy management apparatus 50 gives a command with regard to the control time of the water electrolysis device 52 and the amount of energy interchange between the water electrolysis device 52, the storage battery 54 and the hydrogen tank 53 in the control time, to the water electrolysis device 52. The water electrolysis device 52 determines the operation pattern such as to fit the control time and the amount of energy interchange in the control time given as the command from the device energy management apparatus 50. Compared with the configuration that the device energy management apparatus 50 determines the operation pattern of the water electrolysis device 52, this configuration reduces the load of the device energy management apparatus 50. Moreover, the water electrolysis device 52 is allowed to determine the own optimum operation pattern within such a range as to meet the control time and the amount of energy interchange in the control time given as the command from the device energy management apparatus 50. This assures the optimum operation at the level of the water electrolysis device 52.

Furthermore, in the energy management system 1B of the embodiment, the unit command portion 50C uses the information with regard to the amount of energy of the storage battery 54 connected with the upstream side of the water electrolysis device 52 and the amount of energy of the hydrogen tank 53 connected with the downstream side of the water electrolysis device 52 as the objects of management to determine the control time and the amount of energy interchange of the water electrolysis device 52. This configuration allows for energy interchange according to the actual states of the storage battery 54 and the hydrogen tank 53 and thereby suppresses the occurrence of deficiency or excess of energy in the storage battery 54 and the hydrogen tank 53.

Moreover, in the energy management system 1B of the embodiment, the unit command portion 50C determines the control time of the water electrolysis device 52 by using the differences between the estimated input-outputs and the actual input-outputs of the storage battery 54 and the hydrogen tank 53, in addition to the differences between the current amounts of energy storage and the upper limit values and the lower limit values of energy storage in the storage battery 54 and the hydrogen tank 53 as shown by Expression (1). This enables the control time suitable for each device to be set by taking into account the difference between the estimated input-output and the actual input-output. This accordingly further suppresses the occurrence of deficiency or excess of energy of the water electrolysis device 52.

Furthermore, in the energy management system 1B of the embodiment, when the calculated control time tₕ is too short, the device energy management apparatus 50 stops the output of the control time tₕ and the amount of energy interchange E to the water electrolysis controller 52A. In this case, for example, the water electrolysis controller 52A outputs a predetermined amount of energy interchange at intervals of every unit time, so as to suppress the operation of the water electrolysis device 52 from becoming unstable.

### <Third Embodiment>

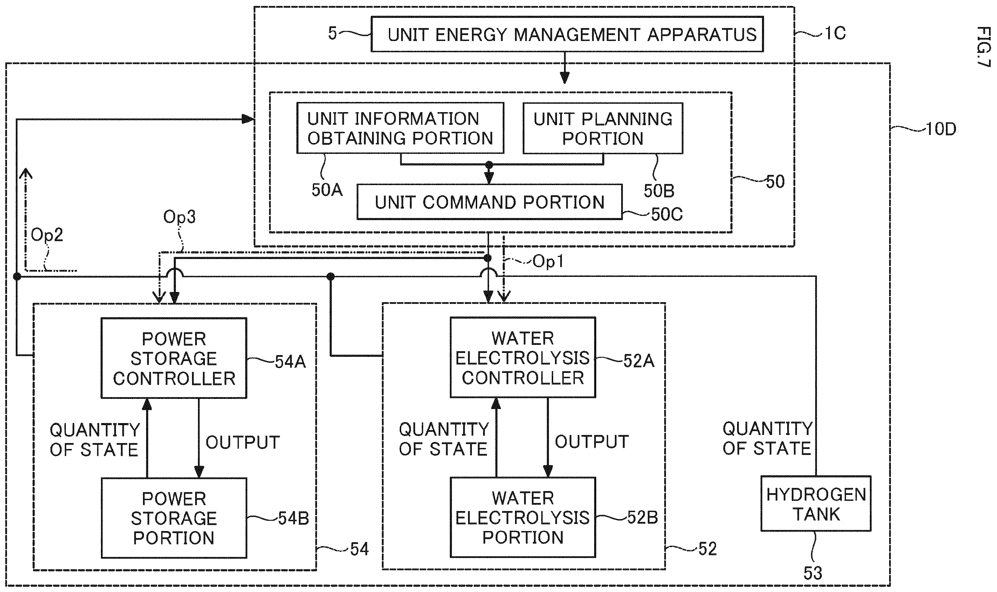

Fig. 7 is a schematic diagram illustrating the configuration of an energy management system according to a third embodiment. An energy management system 1C of the third embodiment differs from the energy management system of the second embodiment (shown in Fig. 5) by that the unit command portion 50C of the device energy management apparatus 50 is electrically connected with the storage battery 54.

In the energy management system 1C of the third embodiment, in the process of energy management of the unit 10D, when information including the control time tₕ and the amount of energy interchange E is input from the unit command portion 50C into the water electrolysis controller 52A (shown by a reference sign Op1 in Fig. 7), the water electrolysis controller 52A determines an operation pattern within the control time tₕ. After determining the operation pattern, the water electrolysis controller 52A sends the determined operation pattern to the device energy management apparatus 50 (shown by a reference sign Op2 in Fig. 7). The device energy management apparatus 50 uses the operation pattern sent from the water electrolysis controller 52A to calculate, for example, the output (W) of the storage battery 52 such as to maintain the power balance within the unit 10D, and gives a command in the unit of second to the power storage controller 54A (shown by a reference signa Op3 in Fig. 7).

In the case where the water electrolysis controller 52A changes the operation pattern in the control time tₕ, the water electrolysis controller 52A sends information with regard to the change of the operation pattern to the device energy management apparatus 50 with every change of the operation pattern. The device energy management apparatus 50 receives the information sent from the water electrolysis controller 52A, recalculates the output of the storage battery 54 and gives a command in the unit of second to the power storage controller 54A.

In the energy management system 1C of the embodiment described above, when the water electrolysis controller 52A configured to control the water electrolysis device 52 changes the operation pattern within the control time, the water electrolysis controller 52A sends the information with regard to the change of the operation pattern to the device energy management apparatus 50. In the unit 10D, a change in the operation pattern of the water electrolysis device 52 changes a future time change in the amount of energy storage in the storage battery 54. The device energy management apparatus 50 accordingly changes the details of the control of the storage battery 54 according to the change of the operation pattern of the water electrolysis device 52. This enables the energy balance to be maintained in the unit 10D and in the factory 10 including the unit 10D.

### <Fourth Embodiment>

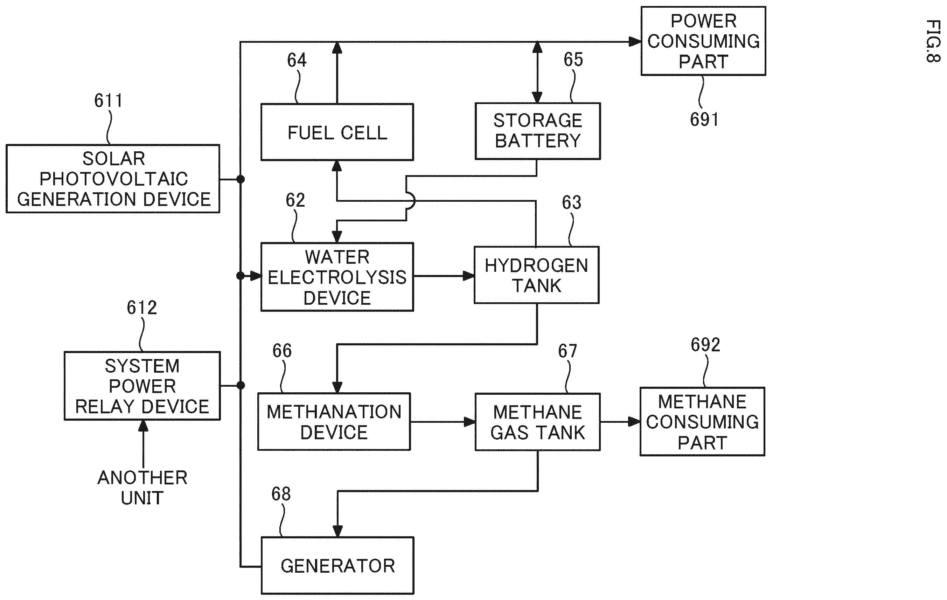

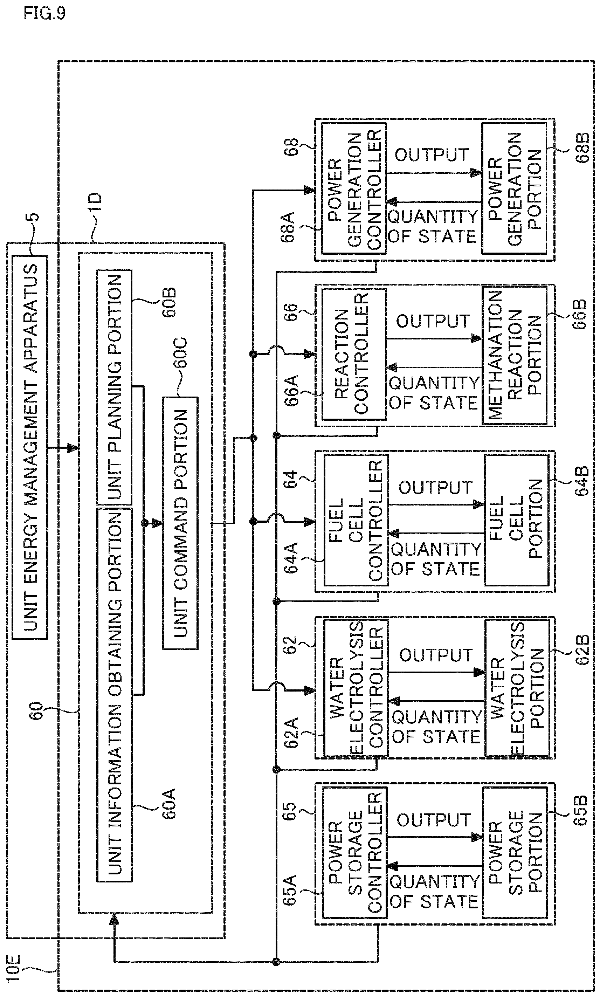

Fig. 8 is a schematic diagram illustrating objects of management of an energy management system according to a fourth embodiment. Fig. 9 is a schematic diagram illustrating the configuration of the energy management system according to this embodiment. An energy management system 1D of the fourth embodiment is applied to a factory 10 provided with a unit 10E including a water electrolysis device 62, a hydrogen tank 63, a fuel cell 64, a storage battery 65, a methanation device 66, a methane gas tank 67 and a generator 68.

The energy management system 1D includes a device energy management apparatus 60 configured to manage the unit 10E. The device energy management apparatus 60 has similar functions to those of the device energy management apparatus 20 of the first embodiment and includes a unit information obtaining portion 60A, a unit planning portion 60B and a unit command portion 60C. The energy management system 1D accordingly reduces the load of the unit energy management apparatus 5 while meeting an operation plan of the entire factory 10 and achieves the respective optimum operations of the water electrolysis device 62, the fuel cell 64, the methanation device 66 and the generator 68. The unit 10E may be regarded as a modification of the unit 10A of the first embodiment.

According to the embodiment, the unit 10E includes a solar photovoltaic generation device 611, a system power relay device 612, a water electrolysis device 62, a hydrogen tank 63, a fuel cell 64, a storage battery 65, a power consuming part 691, a methanation device 66, a methane gas tank 67, a methane consuming part 692, and a generator 68. In the unit 10E, the solar photovoltaic generation device 611 serving as an energy supply source supplies the generated electric power to the water electrolysis device 62, the storage battery 65 and the power consuming part 691. The water electrolysis device 62 uses the electric power supplied from the solar photovoltaic generation device 611 and the storage battery 65 to electrolyze water and generate hydrogen. The hydrogen tank 63 stores the hydrogen generated by the water electrolysis device 62. The fuel cell 64 uses the hydrogen stored in the hydrogen tank 63 to generate electric power. The storage battery 65 stores the electric power generated by the fuel cell 64 and also stores part of the electric power generated by the solar photovoltaic generation device 611.

The methanation device 66 generates methane by using the hydrogen stored in the hydrogen tank 63 and carbon dioxide supplied from outside of the unit 10E (4H₂ + CO₂ → CH₄ + 2H₂O). The carbon dioxide may be obtained by, for example, collecting from an exhaust gas discharged from a combustor placed outside of the unit 10E. The methane gas tank 67 stores the methane gas generated by the methanation device 66. The methane consuming part 692 utilizes the methane gas stored in the methane gas tank 67.

The generator 68 generates electric power by utilizing the methane gas stored in the methane gas tank 67. The electric power generated by the generator 68 may be used by the water electrolysis device 62 or may be stored in the storage battery 65. In the unit 10E, in the case of shortage of energy within the unit 10E, the system power relay device 612 supplies electric power from another unit into the unit 10E.

Among the devices included in the unit 10E, the potential objects of management by the device energy management apparatus 60 are the storage battery 65, the water electrolysis device 62, the fuel cell 64, the methanation device 66 and the generator 68. According to the embodiment, the device energy management apparatus 60 controls the water electrolysis device 62, the fuel cell 64, the methanation device 66 and the generator 68. According to the embodiment, the device energy management apparatus 60 does not give a command to the storage battery 65. For example, like the storage battery 54 of the second embodiment, a power storage controller 65A controls a power storage portion 65B configured to charge and discharge electric power, independently of the device energy management apparatus 60 as described above.

The device energy management apparatus 60 of the embodiment includes a unit information obtaining portion 60A, a unit planning portion 60B and a unit command portion 60C. As shown in Fig. 9, the unit information obtaining portion 60A is electrically connected with the storage battery 65, the water electrolysis device 62, the fuel cell 64, the methanation device 66 and the generator 68 and obtains information with regard to the respective states of operations and states of energy of the storage battery 65, the water electrolysis device 62, the fuel cell 64, the methanation device 66 and the generator 68.

The unit planning portion 60B is electrically connected with the unit energy management apparatus 5 and receives the input of the control time of the unit 10E and the amount of energy interchange in the control time from the unit energy management apparatus 5. The unit planning portion 60B prepares respective operation plans of the water electrolysis device 62, the fuel cell 64, the methanation device 66 and the generator 68 by using the information with regard to the respective states of operations and the respective states of energy of the storage battery 65, the water electrolysis device 62, the fuel cell 64, the methanation device 66 and the generator 68 obtained by the unit information obtaining portion 60A, the control time of the unit 10E, and the amount of energy interchange in the control time.

The unit command portion 60C calculates respective control times and amounts of energy interchange of the water electrolysis device 62, the fuel cell 64, the methanation device 66 and the generator 68, based on the operation plans prepared by the unit planning portion 60B, and outputs the calculation results to the respective devices. According to the embodiment, the unit command portion 60C calculates respective control times tₕ and amounts of energy interchange E of the water electrolysis device 62, the fuel cell 64, the methanation device 66 and the generator 68, for example, by using Expression (1) and Expression (3) of the second embodiment. The unit command portion 60C outputs information including the calculated control times tₕ and the calculated amounts of energy interchange E to each of the water electrolysis device 62, the fuel cell 64, the methanation device 66 and the generator 68.

The water electrolysis device 62 is connected with the storage battery 65 on an upstream side thereof in an energy transfer direction and is also connected with the hydrogen tank 63 on a downstream side thereof (as shown in Fig. 8). Accordingly, the calculation of the control time tₕ with regard to the water electrolysis device 62 according to Expression (1) by the unit command portion 60C uses the current amounts of energy storage, the upper limit amounts and the lower limit amounts of energy storage and the differences between the estimated input-outputs and the actual input-outputs of the storage battery 65 and the hydrogen tank 63. A water electrolysis controller 62A of the water electrolysis device 62 determines an optimum operation pattern, based on the information including the calculated control time tₕ and the calculated amount of energy interchange E output from the unit command portion 60C, and outputs the determined optimum operation pattern to a water electrolysis portion 62B configured to perform electrolysis of water. The water electrolysis portion 62B then operates according to the optimum operation pattern, while meeting the operation plan of the unit 10E.

The fuel cell 64 is connected with the hydrogen tank 63 on an upstream side thereof in the energy transfer direction and is also connected with the storage battery 65 on a downstream side thereof (as shown in Fig. 8). Accordingly, the calculation of the control time tₕ with regard to the fuel cell 64 according to Expression (1) by the unit command portion 60C uses the current amounts of energy storage, the upper limit amounts and the lower limit amounts of energy storage and the differences between the estimated input-outputs and the actual input-outputs of the hydrogen tank 63 and the storage battery 65. A fuel cell controller 64A of the fuel cell 64 determines an optimum operation pattern, based on the information including the calculated control time tₕ and the calculated amount of energy interchange E output from the unit command portion 60C, and outputs the determined optimum operation pattern to a fuel cell portion 64B configured to generate electric power by a reaction of water with oxygen. The fuel cell portion 64B then operates according to the optimum operation pattern, while meeting the operation plan of the unit 10E.

The hydrogen tank 63 is placed on an upstream side of the methanation device 66 in the energy transfer direction, and the methane gas tank 67 is placed on a downstream side of the methanation device 66. Accordingly, the calculation of the control time tₕ with regard to the methanation device 66 according to Expression (1) by the unit command portion 60C uses the current amounts of energy storage, the upper limit amounts and the lower limit amounts of energy storage and the differences between the estimated input-outputs and the actual input-outputs of the hydrogen tank 63 and the methane gas tank 67. A reaction controller 66A of the methanation device 66 determines an optimum operation pattern, based on the information including the calculated control time tₕ and the calculated amount of energy interchange E output from the unit command portion 60C, and outputs the determined optimum operation pattern to a methanation reaction portion 66B configured to generate methane by a reaction of hydrogen with carbon dioxide. The methanation reaction portion 66B then operates according to the optimum operation pattern, while meeting the operation plan of the unit 10E.

The methane gas tank 67 is placed on an upstream side of the generator 68 in the energy transfer direction, and the storage battery 65 is placed on a downstream side of the generator 68. Accordingly, the calculation of the control time tₕ with regard to the generator 68 according to Expression (1) by the unit command portion 60C uses the current amounts of energy storage, the upper limit amounts and the lower limit amounts of energy storage and the differences between the estimated input-outputs and the actual input-outputs of the methane gas tank 67 and the storage battery 65. A power generation controller 68A of the generator 68 determines an optimum operation pattern, based on the information including the calculated control time tₕ and the calculated amount of energy interchange E output from the unit command portion 60C, and outputs the determined optimum operation pattern to a power generation portion 68B configured to generate electric power by combustion of methane gas. The power generation portion 68B then operates according to the optimum operation pattern, while meeting the operation plan of the unit 10E.

In the energy management system 1D of the embodiment described above, the device energy management apparatus 60 gives a command with regard to the control time and the amount of energy interchange in the control time to each of the water electrolysis device 62, the fuel cell 64, the methanation device 66 and the generator 68. Each of the water electrolysis device 62, the fuel cell 64, the methanation device 66 and the generator 68 determines the operation pattern such as to fit the control time and the amount of energy interchange given as the command from the device energy management apparatus 60. Compared with the configuration that the device energy management apparatus 60 determines the respective operation patterns of the water electrolysis device 62, the fuel cell 64, the methanation device 66 and the generator 68, this configuration reduces the load of the device energy management apparatus 60. Furthermore, each of the water electrolysis device 62, the fuel cell 64, the methanation device 66 and the generator 68 is allowed to determine the own optimum operation pattern within such a range as to meet the control time and the amount of energy interchange in the control time given as the command from the device energy management apparatus 60. This assures the optimum operation at the level of each of the water electrolysis device 62, the fuel cell 64, the methanation device 66 and the generator 68.

### <Fifth Embodiment>

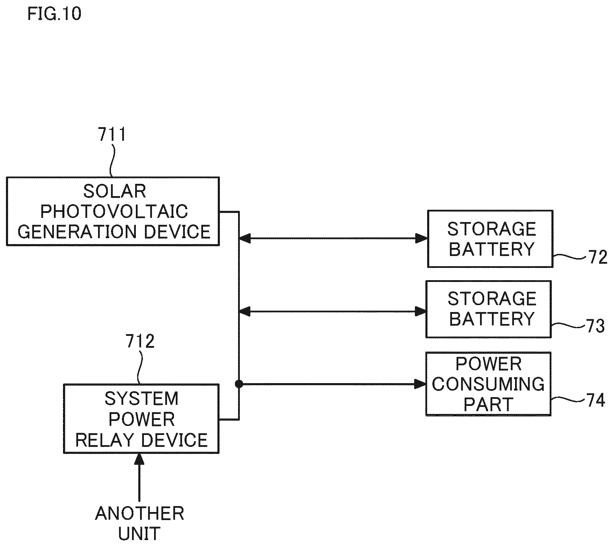

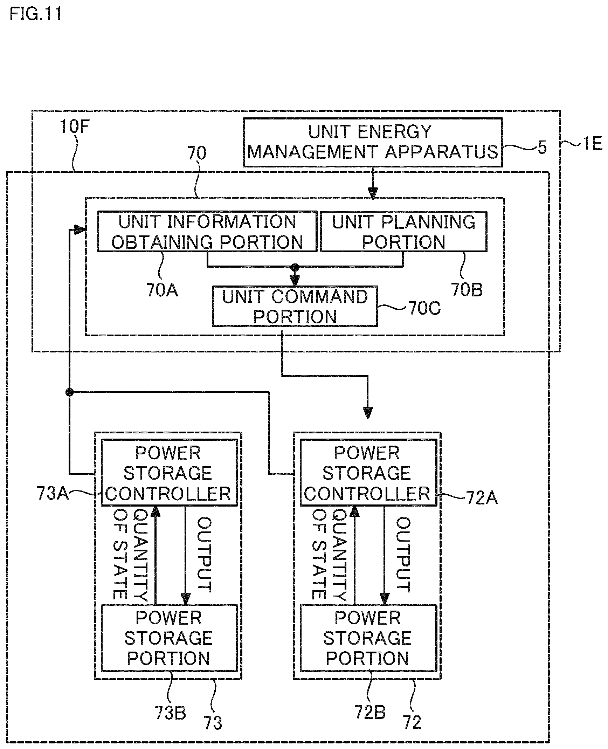

Fig. 10 is a schematic diagram illustrating objects of management of an energy management system according to a fifth embodiment. Fig. 11 is a schematic diagram illustrating the configuration of the energy management system according to the fifth embodiment. An energy management system 1E of the fifth embodiment is applied to a factory 10 provided with a unit 10F including two storage batteries 72 and 73 (as shown in Fig. 10).

The energy management system 1E includes a device energy management apparatus 70 configured to manage the unit 10F. The device energy management apparatus 70 has similar functions to those of the device energy management apparatus 20 of the first embodiment. The energy management system 1E accordingly reduces the load of the unit energy management apparatus 5 while meeting an operation plan of the entire factory 10, and achieves the optimum operation of one of the two storage batteries 72 and 73. The unit 10F may be regarded as a modification of the unit 10A of the first embodiment.

According to the embodiment, the unit 10F includes a solar photovoltaic generation device 711, a system power relay device 712, the two storage batteries 72 and 73 and a power consuming part 74. In the unit 10F, the solar photovoltaic generation device 711 serves as an energy supply source. The electric power supplied from the solar photovoltaic generation device 711 is stored into the two storage batteries 72 and 73. The electric power stored in the solar photovoltaic generation device 711 is consumed by the power consuming part 74. In the unit 10F, in the case of shortage of energy within the unit 10F, the system power relay device 712 supplies electric power from another unit into the unit 10F. Among the devices included in the unit 10F, the potential objects of management by the device energy management apparatus 70 are the storage battery 72 and the storage battery 73. According to the embodiment, the device energy management apparatus 70 does not give a command to the storage battery 73. For example, like the storage battery 54 of the second embodiment, a power storage controller 73A controls a power storage portion 73B configured to charge and discharge electric power, independently of the device energy management apparatus 70 as described above.

The device energy management apparatus 70 of the embodiment includes a unit information obtaining portion 70A, a unit planning portion 70B, and a unit command portion 70C. As shown in Fig. 11, the unit information obtaining portion 70A is electrically connected with each of the two storage batteries 72 and 73. The unit information obtaining portion 70A obtains information with regard to respective states of operations and states of energy of the storage batteries 72 and 73.

The unit planning portion 70B is electrically connected with the unit energy management apparatus 5. A control time of the unit 10F and an amount of energy interchange in the control time are input from the unit energy management apparatus 5 into the unit planning portion 70B. The unit planning portion 70B prepares a power storage plan of the storage battery 72 by using the information, obtained by the unit information obtaining portion 70A, with regard to the respective states of operations and the respective states of energy of the storage batteries 72 and 73, the control time of the unit 10F and the amount of energy interchange in the control time.

The unit command portion 70C calculates a control time of the storage battery 72, based on the operation plan prepared by the unit planning portion 70B and outputs the calculated control time to the storage battery 72. According to the embodiment, the unit command portion 70C uses Expression (2) given below to calculate the control time tₕ:
[Math. 9] ${t}_{h} = Min \left(\begin{matrix}Min \left(\frac{{E}_{max - γ} - {E}_{now - γ}}{{P}_{er - γ}}, \frac{{E}_{now - γ} - {E}_{min - γ}}{{P}_{er - γ}}\right) \\ , Min \left({\sum }_{i = 1}^{{n}_{i}} \left(\frac{{E}_{max - δ _ i} - {E}_{now - δ _ i}}{{P}_{er - δ _ i}}\right) , {\sum }_{i = 1}^{{n}_{i}} \left(\frac{{E}_{now - δ _ i} - {E}_{min - δ _ i}}{{P}_{er - δ _ i}}\right)\right)\end{matrix}\right)$ (2)

In Expression (2), tₕ denotes a control time (s) of a specific energy storage device, E_{max-γ} denotes an upper limit amount of energy storage (Wh) of the specific energy storage device, E_{min-γ} denotes a lower limit amount of energy storage (Wh) of the specific energy storage device, E_{now-γ} denotes a current amount of energy storage (Wh) of the specific energy storage device, P_{er-γ} denotes a difference between an estimated input-output and an actual input-output (W) of the specific energy storage device, E_{max-δ_i} denotes an upper limit amount of energy storage (Wh) of an i-th energy storage device connected with the specific energy storage device, E_{min-δ_i} denotes a lower limit amount of energy storage (Wh) of the i-th energy storage device connected with the specific energy storage device, E_{now-δ_i} denotes a current amount of energy storage (Wh) of the i-th energy storage device connected with the specific energy storage device, P_{er-δ_i} denotes a difference between an estimated input-output and an actual input-output (W) of the i-th energy storage device connected with the specific energy storage device, i is an integer of not smaller than 1, and nᵢ denotes the number of energy storage devices connected with the specific energy storage device.

According to the embodiment, the "specific energy storage device" in Expression (2) is the storage battery 72, and the "connected energy storage device" is the storage battery 73. According to the embodiment, the energy storage device connected with the storage battery 72 is only the storage battery 73, so that i is equal to 1.

The unit command portion 70C calculates an amount of energy interchange E of the storage battery 72, based on the operation plan prepared by the unit planning portion 70B. The unit command portion 70C uses Expression (3) to calculate the amount of energy interchange E, like the second embodiment:
[Math. 10] $E = {\int }_{{t}_{now}}^{{t}_{now + {t}_{h}}} {P}_{op _ ε} dt$ (3)

In Expression (3), t_{now} denotes a current time (hour), tₕ denotes the control time (s) of the storage battery 72, and P_{op_ε} denotes an operation plan output value (W) of the storage battery 72.

The unit command portion 70C calculates the control time tₕ and the amount of energy interchange E of the storage battery 72. The unit command portion 70C outputs information including the control time tₕ and the amount of energy interchange E of the storage battery 72 to the power storage controller 72A of the storage battery 72. The power storage battery 72A controls the power storage portion 72B configured to store the electric power, in response to a command of the unit command portion 70C.

In the energy management system 1E of the embodiment, the device energy management apparatus 70 gives a command with regard to the control time of the storage battery 72 and the amount of energy interchange between the storage battery 72 and the storage battery 73 in the control time, to the storage battery 72. The storage battery 72 determines an operation pattern such as to fit the control time and the amount of energy interchange in the control time given as the command from the device energy management apparatus 70. Compared with the configuration that the device energy management apparatus 70 determines the operation pattern of the storage battery 72, this configuration reduces the load of the device energy management apparatus 70. Furthermore, the storage battery 72 is allowed to determine the own optimum operation pattern within such a range as to meet the control time and the amount of energy interchange in the control time given as the command from the device energy management apparatus 70. This assures the optimum operation at the level of the storage battery 72.

Moreover, in the energy management system 1E of the embodiment, the unit command portion 70C uses the information with regard to the amount of energy in the storage battery 73 connected with the storage battery 72 as the object of management to determine the control time and the amount of energy interchange of the storage battery 72. This configuration allows for energy interchange according to the actual state of the storage battery 73 and thereby suppresses the occurrence of deficiency or excess of energy in the storage battery 73.

Furthermore, in the energy management system 1E of the embodiment, the unit command portion 70C determines the control time of the storage battery 72 by using the difference between the estimated input-output and the actual input-output of the energy storage device, in addition to the differences between the current amount of energy storage and the upper limit value and the lower limit value of the amount of energy storage in the storage battery 73. This configuration enables the control time suitable for each device to be set by taking into account the difference between the estimated input-output and the actual input-output and thereby further suppresses the occurrence of deficiency or excess of energy in the storage battery 73.

### <Modifications of Embodiments>

The present disclosure is not limited to the embodiments described above but may be implemented in a variety of configurations without departing from the subject matter or the scope of the present disclosure, for example, modifications described below.

### [Modification 1]

In the energy management system of the embodiment described above, the unit energy management apparatus 5 manages the energies of the plurality of units 10A, 10B and 10C, and each of the device energy management apparatuses 20, 30 and 40 manages a plurality of devices belong to each of the units 10A, 10B and 10C. The configuration of the energy management system is, however, not limited to the configuration of this embodiment. One energy management apparatus may be used to directly manage a plurality of devices.

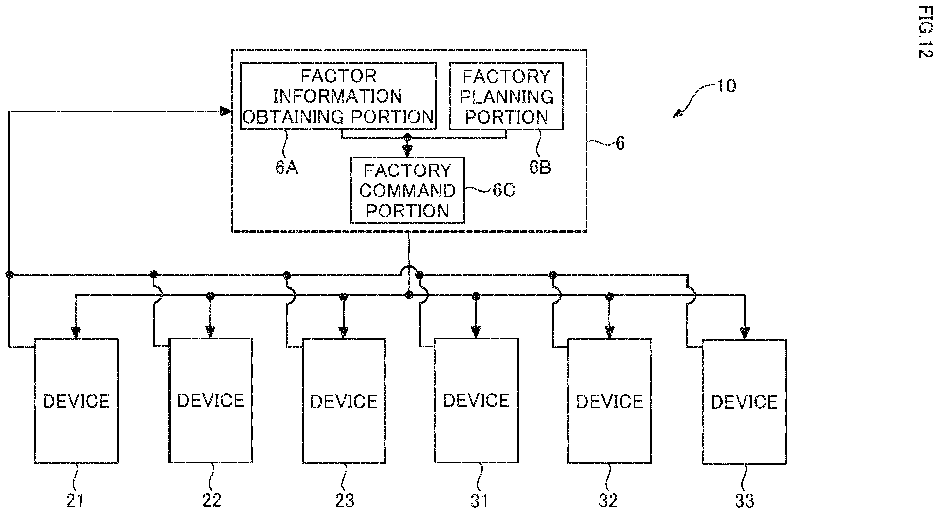

Fig. 12 is a schematic diagram illustrating a modification of the energy management system of the first embodiment. A factory 10 shown in Fig. 12 includes a factory energy management apparatus 6 and a plurality of devices 21, 22, 23, 31, 32 and 33. The factory energy management apparatus 6 is electrically connected with each of the plurality of devices 21, 22, 23, 31, 32 and 33 and collects information with regard to energy, for example, respective supply and demand amounts and respective storage amounts of energy of the plurality of devices 21, 22, 23, 31, 32 and 33. The factory energy management apparatus 6 has a similar configuration to that of the unit energy management apparatus 5 of the first embodiment and includes a factory information obtaining portion 6A, a factory planning portion 6B and a factory command portion 6C. The factory energy management apparatus 6 outputs a command including a control time and an amount of energy interchange to each of the plurality of devices 21, 22, 23, 31, 32 and 33, based on respective energy interchange plans of the plurality of devices 21, 22, 23, 31, 32 and 33 that are prepared such as to meet an operation plan of the entire factory 10. Each of the plurality of devices 21, 22, 23, 31, 32 and 33 determines the own optimum operation pattern within such a range as to meet the control time and the amount of energy interchange output from the factory energy management apparatus 6. This configuration reduces the load of the factory energy management apparatus 6 and assures the optimum operation at the level of each of the plurality of devices while meeting the operation plan of the entire factory 10.

### [Modification 2]

In the embodiment described above, the unit energy management apparatus 5 includes the factory information obtaining portion 5A configured to obtain the information with regard to the energies of the devices belonging to the device energy management apparatus. The unit energy management apparatus 5 may, however, not include the factory information obtaining portion 5A. In this modification, the factory planning portion 5B may prepare energy interchange plans of the respective units 10A, 10B and 10C such as to meet the operation plan of the entire factory 10.

### [Modification 3]

According to the first to the fifth embodiments, in the energy management system, the unit energy management apparatus 5 configured to manage the energies of the respective units 10A, 10B and 10C and the device energy management apparatus configured to manage the energies of the plurality of devices included in each unit are arranged in a hierarchical manner. Three or more management apparatuses may be arranged in a hierarchical manner.

### [Modification 4]

In the embodiment described above, the energy management system is configured to manage the energy in the factory 10 including the plurality of devices 21, 22, 23, 31, 32, 33, 41, 42 and 43. The object of management by the energy management system is, however, not limited to the configuration in the factory. The object of management by the energy management system may be any configuration that includes a plurality of elements and that performs energy interchange between the elements.

The foregoing describes the aspects of the present disclosure based on the embodiments and the modifications. The embodiments and the modifications described above are, however, provided only for the purpose of easy understanding of the aspects of the present disclosure and are not intended to limit the aspects of the present disclosure. The aspects of the present disclosure may be changed, altered or modified without departing from the technical features or the scope of the present disclosure and include such equivalents thereof. The technical features may be appropriately omitted unless the technical features are mentioned as essential in the description hereof.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### Reference Signs List

1A, 1B, 1C, 1D, 1E energy management system
5 unit energy management apparatus
6 factory energy management apparatus
10A, 10B, 10C, 10D, 10E, 10F unit
20, 30, 40, 50, 60, 70 device energy management apparatus
21, 22, 23, 31, 32, 33, 41, 42, 43 device
52, 62 water electrolysis device
53, 65, 72, 73 storage battery
54, 63 hydrogen tank
64 fuel cell
66 methanation device
67 methane gas tank
68 generator
tₕ control time
E amount of energy interchange

## Claims

1. An energy management apparatus (50,60,70) configured to manage energy of an object of management (52,54,62,64,66,68,72), wherein
the object of management includes a unit including an energy conversion device (52,62,64,66,68), an upstream-side energy storage device (54,63,65,67) connected with an upstream side of the energy conversion device (52,62,64,66,68) in an energy transfer direction and a downstream-side energy storage device (53,63,65,67) connected with a downstream side of the energy conversion device (52,62,64,66,68) in the energy transfer direction,
the energy management apparatus (50,60,70) comprising:
an information obtaining portion (50A,60A,70A) configured to obtain information with regard to a state of operation of the object of management (52,54,62,64,66,68,72);
a planning portion (50B,60B,70B) configured to obtain an operation plan of the object of management; and
a command portion (50C,60C,70C) configured to determine a control time (tₕ) of the object of management and an amount of energy (E) interchange in the control time by using the information obtained by the information obtaining portion (50A,60A,70A) and the operation plan obtained by the planning portion (50B,60B,70B), wherein
the energy management apparatus (50,60,70) gives a command with regard to the control time (tₕ) of the object of management and the amount of energy (E) interchange in the control time, to the object of management,
the information obtaining portion (50A,60A) obtains information with regard to differences between a current amount of energy storage and an upper limit value and a lower limit value of an amount of energy storage in the upstream-side energy storage device (54,63,65,67) and with regard to differences between a current amount of energy storage and an upper limit value and a lower limit value of an amount of energy storage in the downstream-side energy storage device (53,63,65,67), and
the command portion (50C,60C) determines a control time (tₕ) of the energy conversion device (52,62,64,66,68) and an amount of energy (E) interchange in the energy conversion device (52,62,64,66,68) by using the information with regard to the differences obtained by the information obtaining portion (50A,60A),
the command portion (50C,60C) uses Expression (1) to determine a control time tₕ of the energy conversion device (52,62,64,66,68):
[Math. 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1) (in Expression (1), tₕ denotes a control time (s) of an energy conversion device (52,62,64,66,68), E_{max-α_i} denotes an upper limit amount of energy storage (Wh) of an i-th upstream side energy storage device (54,63,65,67), E_{min-α_i} denotes a lower limit amount of energy storage (Wh) of the i-th upstream side energy storage device (54,63,65,67), E_{now-α_i} denotes a current amount of energy storage (Wh) of the i-th upstream side energy storage device (54,63,65,67), P_{er-α_i} denotes a difference between an estimated input-output and an actual input-output (W) into and from the i-th upstream side energy storage device (54,63,65,67), E_{max-β_j} denotes an upper limit amount of energy storage (Wh) of a j-th downstream side energy storage device (53,63,65,67), E_{min-β_j} denotes a lower limit amount of energy storage (Wh) of the j-th downstream side energy storage device (53,63,65,67), E_{now-β_j} denotes a current amount of energy storage (Wh) of the j-th downstream side energy storage device (53,63,65,67), P_{er-β_j} denotes a difference between an estimated input-output and an actual input-output (W) into and from the j-th downstream side energy storage device (53,63,65,67), i and j are integers of not smaller than 1, nᵢ denotes a number of upstream side energy storage devices (52,62,64,66,68), and nⱼ denotes a number of downstream side energy storage devices (53,63,65,67).)

2. The energy management apparatus (70) according to claim 1, wherein
the object of management includes a unit including a plurality of energy storage devices (72,73),
the information obtaining portion (70A) obtains information with regard to differences between a current amount of energy storage and an upper limit value and a lower limit value of an amount of energy storage in a specific energy storage device (72) among the plurality of energy storage devices (72,73) and with regard to differences between a current amount of energy storage and an upper limit value and a lower limit value of an amount of energy storage in an energy storage device (73) connected with the specific energy storage device (72), and
the command portion (70C) determines a control time of the specific energy storage device (72) and an amount of energy interchange in the specific energy storage device (72), based on the information with regard to the differences obtained by the information obtaining portion (70A).

3. The energy management apparatus (70) according to claim 2, wherein
the command portion (70C) uses Expression (2) to determine a control time tₕ of the specific energy storage device:
[Math. 2] ${t}_{h} = Min \left(\begin{matrix}Min \left(\frac{{E}_{max - γ} - {E}_{now - γ}}{{P}_{er - γ}}, \frac{{E}_{now - γ} - {E}_{min - γ}}{{P}_{er - γ}}\right) \\ , Min \left({\sum }_{i = 1}^{{n}_{i}} \left(\frac{{E}_{max - δ _ i} - {E}_{now - δ _ i}}{{P}_{er - δ _ i}}\right) , {\sum }_{i = 1}^{{n}_{i}} \left(\frac{{E}_{now - δ _ i} - {E}_{min - δ _ i}}{{P}_{er - δ _ i}}\right)\right)\end{matrix}\right)$ (2) (in Expression (2), tₕ denotes a control time (s) of a specific energy storage device (72), E_{max-γ} denotes an upper limit amount of energy storage (Wh) of the specific energy storage device (72), E_{min-γ} denotes a lower limit amount of energy storage (Wh) of the specific energy storage device (72), E_{now-γ} denotes a current amount of energy storage (Wh) of the specific energy storage device (72), P_{er-γ} denotes a difference between an estimated input-output and an actual input-output (W) of the specific energy storage device (72), E_{max-δ_i} denotes an upper limit amount of energy storage (Wh) of an i-th energy storage device (73) connected with the specific energy storage device (72), E_{min-δ_i} denotes a lower limit amount of energy storage (Wh) of the i-th energy storage device (73) connected with the specific energy storage device (72), E_{now-δ_i} denotes a current amount of energy storage (Wh) of the i-th energy storage device (73) connected with the specific energy storage device (72), P_{er-δ_i} denotes a difference between an estimated input-output and an actual input-output (W) of the i-th energy storage device (73) connected with the specific energy storage device (72), i is an integer of not smaller than 1, and nᵢ denotes a number of energy storage devices (73) connected with the specific energy storage device (72).)

4. The energy management apparatus (50,60,70) according to any one of claims 1 to 3, wherein
the command portion (50C,60C,70C) uses Expression (3) to determine an amount of energy interchange E in the object of management (52,54,62,64,66,68,72):
[Math. 3] $E = {\int }_{{t}_{now}}^{{t}_{now + {t}_{h}}} {P}_{op _ ε} dt$ (3) (in Expression (3), t_{now} denotes a current time (s), tₕ denotes a control time (s) of the object of management, and P_{op_ε} denotes an operation plan output value (W) of the object of management.)

5. The energy management apparatus (50,60,70) according to any one of claims 1 to 4,
when the control time is not longer than a predetermined value, the energy management apparatus (50,60,70) stopping giving the command with regard to the control time and the amount of energy interchange, to the object of management (52,54,62,64,66,68,72).

6. An energy management system (1B,1C,1D,1E), comprising:
a device energy management apparatus (50,60,70) configured to give a command with regard to a control time of one or more devices (52,54,62,64,66,68,72) and an amount of energy interchange in the control time, to the one or more devices (52,54,62,64,66,68,72); and
a unit energy management apparatus (5) configured to manage energy of a unit (10D,10E,10F) including the one or more devices (52,54,62,64,66,68,72) and the device energy management apparatus (50,60,70) and configured to give a command with regard to a control time of the unit and an amount of energy interchange in the control time, to the device energy management apparatus (50,60,70), wherein
the one or more devices (52,54,62,64,66,68) make up a unit including an energy conversion device (52,62,64,66,68), an upstream-side energy storage device (54,63,65,67) connected with an upstream side of the energy conversion device (52,62,64,66,68) in an energy transfer direction and a downstream-side energy storage device (53,63,65,67) connected with a downstream side of the energy conversion device (52,62,64,66,68) in the energy transfer direction,
the device energy management apparatus (50,60) comprising:
an information obtaining portion (50A,60A) configured to obtain information with regard to a state of operation of the one or more devices (52,54,62,64,66,68);
a planning portion (50B,60B) configured to obtain an operation plan of the one or more devices; and
a command portion (50C,60C) configured to determine a control time (tₕ) of the one or more devices and an amount of energy (E) interchange in the control time by using the information obtained by the information obtaining portion (50A,60A) and the operation plan obtained by the planning portion (50B,60B), wherein
the device energy management apparatus (50,60) gives a command with regard to the control time (tₕ) of the one or more devices and the amount of energy (E) interchange in the control time, to the one or more devices,
the information obtaining portion (50A,60A) obtains information with regard to differences between a current amount of energy storage and an upper limit value and a lower limit value of an amount of energy storage in the upstream-side energy storage device (54,63,65,67) and with regard to differences between a current amount of energy storage and an upper limit value and a lower limit value of an amount of energy storage in the downstream-side energy storage device (53,63,65,67), and
the command portion (50C,60C) determines a control time(tₕ) of the energy conversion device (52,62,64,66,68) and an amount of energy (E) interchange in the energy conversion device (52,62,64,66,68) by using the information with regard to the differences obtained by the information obtaining portion (50A,60A),
the command portion (50C,60C) uses Expression (1) to determine a control time tₕ of the energy conversion device (52,62,64,66,68):
[Math. 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1) (in Expression (1), tₕ denotes a control time (s) of an energy conversion device (52,62,64,66,68), E_{max-α_i} denotes an upper limit amount of energy storage (Wh) of an i-th upstream side energy storage device (54,63,65,67), E_{min-α_i} denotes a lower limit amount of energy storage (Wh) of the i-th upstream side energy storage device (54,63,65,67), E_{now-α_i} denotes a current amount of energy storage (Wh) of the i-th upstream side energy storage device (54,63,65,67), P_{er-α_i} denotes a difference between an estimated input-output and an actual input-output (W) into and from the i-th upstream side energy storage device (54,63,65,67), E_{max-β_j} denotes an upper limit amount of energy storage (Wh) of a j-th downstream side energy storage device (53,63,65,67), E_{min-β_j} denotes a lower limit amount of energy storage (Wh) of the j-th downstream side energy storage device (53,63,65,67), E_{now-β_j} denotes a current amount of energy storage (Wh) of the j-th downstream side energy storage device (53,63,65,67), P_{er-β_j} denotes a difference between an estimated input-output and an actual input-output (W) into and from the j-th downstream side energy storage device (53,63,65,67), i and j are integers of not smaller than 1, nᵢ denotes a number of upstream side energy storage devices (52,62,64,66,68), and nⱼ denotes a number of downstream side energy storage devices (53,63,65,67).)

7. An energy management method of causing energy of an object of management (10D, 10E, 10F) to be managed by an energy management apparatus (5,6), the energy management method comprising:
giving a command with regard to a control time(tₕ) of the object of management and an amount of energy(E) interchange in the control time, to the object of management, wherein
the object of management is one or more units (10D,10E,10F) comprising a plurality of devices (52,54,62,64,66,68,72), and another energy management apparatus (50,60,70) configured to manage energies of the plurality of devices, wherein
the plurality of devices (52,54,62,64,66,68) make up a unit including an energy conversion device (52,62,64,66,68), an upstream-side energy storage device (54,63,65,67) connected with an upstream side of the energy conversion device (52,62,64,66,68) in an energy transfer direction and a downstream-side energy storage device (53,63,65,67) connected with a downstream side of the energy conversion device (52,62,64,66,68) in the energy transfer direction,
the another energy management apparatus (50,60) comprising:
an information obtaining portion (50A,60A) configured to obtain information with regard to a state of operation of the plurality of devices (52,54,62,64,66,68);
a planning portion (50B,60B) configured to obtain an operation plan of the plurality of devices; and
a command portion (50C,60C) configured to determine a control time (tₕ) of the plurality of devices and an amount of energy (E) interchange in the control time by using the information obtained by the information obtaining portion (50A,60A) and the operation plan obtained by the planning portion (50B,60B), wherein
the another energy management apparatus (50,60) gives a command with regard to the control time (tₕ) of the one or more devices and the amount of energy (E) interchange in the control time, to the one or more devices,
the information obtaining portion (50A,60A) obtains information with regard to differences between a current amount of energy storage and an upper limit value and a lower limit value of an amount of energy storage in the upstream-side energy storage device (54,63,65,67) and with regard to differences between a current amount of energy storage and an upper limit value and a lower limit value of an amount of energy storage in the downstream-side energy storage device (53,63,65,67), and
the command portion (50C,60C) determines a control time (tₕ) of the energy conversion device (52,62,64,66,68) and an amount of energy (E) interchange in the energy conversion device (52,62,64,66,68) by using the information with regard to the differences obtained by the information obtaining portion (50A,60A),
the command portion (50C,60C) uses Expression (1) to determine a control time tₕ of the energy conversion device (52,62,64,66,68):
[Math. 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1) (in Expression (1), tₕ denotes a control time (s) of an energy conversion device (52,62,64,66,68), E_{max-α_i} denotes an upper limit amount of energy storage (Wh) of an i-th upstream side energy storage device (54,63,65,67), E_{min-α_i} denotes a lower limit amount of energy storage (Wh) of the i-th upstream side energy storage device (54,63,65,67), E_{now-α_i} denotes a current amount of energy storage (Wh) of the i-th upstream side energy storage device (54,63,65,67), P_{er-α_i} denotes a difference between an estimated input-output and an actual input-output (W) into and from the i-th upstream side energy storage device (54,63,65,67), E_{max-β_j} denotes an upper limit amount of energy storage (Wh) of a j-th downstream side energy storage device (53,63,65,67), E_{min-β_j} denotes a lower limit amount of energy storage (Wh) of the j-th downstream side energy storage device (53,63,65,67), E_{now-β_j} denotes a current amount of energy storage (Wh) of the j-th downstream side energy storage device (53,63,65,67), P_{er-β_j} denotes a difference between an estimated input-output and an actual input-output (W) into and from the j-th downstream side energy storage device (53,63,65,67), i and j are integers of not smaller than 1, nᵢ denotes a number of upstream side energy storage devices (52,62,64,66,68), and nⱼ denotes a number of downstream side energy storage devices (53,63,65,67).)

8. A computer program that causes a computer to manage energy of an object of management (10D,10E,10F), wherein
the object of management is one or more units (10D,10E,10F) comprising a plurality of devices (52,54,62,64,66,68,72) and another energy management apparatus (50,60,70) configured to manage energies of the plurality of devices,
the computer program causing the computer to perform a function of giving a command with regard to a control time of the object of management and an amount of energy interchange in the control time, to the object of management,
the plurality of devices (52,54,62,64,66,68) make up a unit including an energy conversion device (52,62,64,66,68), an upstream-side energy storage device (54,63,65,67) connected with an upstream side of the energy conversion device (52,62,64,66,68) in an energy transfer direction and a downstream-side energy storage device (53,63,65,67) connected with a downstream side of the energy conversion device (52,62,64,66,68) in the energy transfer direction,
the another energy management apparatus (50,60) comprising:
an information obtaining portion (50A,60A) configured to obtain information with regard to a state of operation of the plurality of devices (52,54,62,64,66,68);
a planning portion (50B,60B) configured to obtain an operation plan of the plurality of devices; and
a command portion (50C,60C) configured to determine a control time (tₕ) of the plurality of devices and an amount of energy (E) interchange in the control time by using the information obtained by the information obtaining portion (50A,60A) and the operation plan obtained by the planning portion (50B,60B), wherein
the another energy management apparatus (50,60) gives a command with regard to the control time (tₕ) of the one or more devices and the amount of energy (E) interchange in the control time, to the one or more devices,
the information obtaining portion (50A,60A) obtains information with regard to differences between a current amount of energy storage and an upper limit value and a lower limit value of an amount of energy storage in the upstream-side energy storage device (54,63,65,67) and with regard to differences between a current amount of energy storage and an upper limit value and a lower limit value of an amount of energy storage in the downstream-side energy storage device (53,63,65,67), and
the command portion (50C,60C) determines a control time (tₕ) of the energy conversion device (52,62,64,66,68) and an amount of energy (E) interchange in the energy conversion device (52,62,64,66,68) by using the information with regard to the differences obtained by the information obtaining portion (50A,60A),
the command portion (50C,60C) uses Expression (1) to determine a control time tₕ of the energy conversion device (52,62,64,66,68):
[Math. 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1) (in Expression (1), tₕ denotes a control time (s) of an energy conversion device (52,62,64,66,68), E_{max-α_i} denotes an upper limit amount of energy storage (Wh) of an i-th upstream side energy storage device (54,63,65,67), E_{min-α_i} denotes a lower limit amount of energy storage (Wh) of the i-th upstream side energy storage device (54,63,65,67), E_{now-α_i} denotes a current amount of energy storage (Wh) of the i-th upstream side energy storage device (54,63,65,67), P_{er-α_i} denotes a difference between an estimated input-output and an actual input-output (W) into and from the i-th upstream side energy storage device (54,63,65,67), E_{max-β_j} denotes an upper limit amount of energy storage (Wh) of a j-th downstream side energy storage device (53,63,65,67), E_{min-β_j} denotes a lower limit amount of energy storage (Wh) of the j-th downstream side energy storage device (53,63,65,67), E_{now-β_j} denotes a current amount of energy storage (Wh) of the j-th downstream side energy storage device (53,63,65,67), P_{er-β_j} denotes a difference between an estimated input-output and an actual input-output (W) into and from the j-th downstream side energy storage device (53,63,65,67), i and j are integers of not smaller than 1, nᵢ denotes a number of upstream side energy storage devices (52,62,64,66,68), and nⱼ denotes a number of downstream side energy storage devices (53,63,65,67).)

## Patentansprüche

1. Energiemanagementeinrichtung (50, 60, 70), die dazu ausgebildet ist, eine Energie eines Managementobjekts (52, 54, 62, 64, 66, 68, 72) zu managen, bei der
das Managementobjekt eine Einheit umfasst, die eine Energieumwandlungsvorrichtung (52, 62, 64, 66, 68), eine vorgelagerte Energiespeichervorrichtung (54, 63, 65, 67), die mit einer vorgelagerten Seite der Energieumwandlungsvorrichtung (52, 62, 64, 66, 68) in einer Energietransferrichtung verbunden ist, und eine nachgelagerte Energiespeichervorrichtung (53, 63, 65, 67), die mit einer nachgelagerten Seite der Energieumwandlungsvorrichtung (52, 62, 64, 66, 68) in der Energietransferrichtung verbunden ist, umfasst,
welche Energiemanagementeinrichtung (50, 60, 70) umfasst:
einen Informationserlangungsabschnitt (50A, 60A, 70A), der dazu ausgebildet ist, eine Information hinsichtlich eines Betriebszustands des Managementobjekts (52, 54, 62, 64, 66, 68, 72) zu erlangen;
einen Planungsabschnitt (50B, 60B, 70B), der dazu ausgebildet ist, einen Betriebsplan des Managementobjekts zu erlangen; und
einen Befehlsabschnitt (50C, 60C, 70C), der dazu ausgebildet ist, eine Steuerungszeit (tₕ) des Managementobjekts und eine Energieaustauschmenge (E) in der Steuerungszeit unter Verwendung der Information, die durch den Informationserlangungsabschnitt (50A, 60A, 70A) erlangt wird, und des Betriebsplans, der durch den Planungsabschnitt (50B, 60B, 70B) erlangt wird, zu bestimmen, bei der
die Energiemanagementeinrichtung (50, 60, 70) einen Befehl hinsichtlich der Steuerungszeit (tₕ) des Managementobjekts und der Energieaustauschmenge (E) in der Steuerungszeit an das Managementobjekt gibt,
der Informationserlangungsabschnitt (50A, 60A) eine Information hinsichtlich Differenzen zwischen einer gegenwärtigen Energiespeichermenge und einem oberen Grenzwert und einem unteren Grenzwert einer Energiespeichermenge in der vorgelagerten Energiespeichervorrichtung (54, 63, 65, 67) und hinsichtlich Differenzen zwischen einer gegenwärtigen Energiespeichermenge und einem oberen Grenzwert und einem unteren Grenzwert einer Energiespeichermenge in der nachgelagerten Energiespeichervorrichtung (53, 63, 65, 67) erlangt, und
der Befehlsabschnitt (50C, 60C) eine Steuerungszeit (tₕ) der Energieumwandlungsvorrichtung (52, 62, 64, 66, 68) und eine Energieaustauschmenge (E) in der Energieumwandlungsvorrichtung (52, 62, 64, 66, 68) unter Verwendung der Information hinsichtlich der Differenzen, die durch den Informationserlangungsabschnitt (50A, 60A) erlangt wird, bestimmt,
der Befehlsabschnitt (50C, 60C) Ausdruck (1) zum Bestimmen einer Steuerungszeit tₕ der Energieumwandlungsvorrichtung (52, 62, 64, 66, 68) verwendet:
[Math. 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1)
(in Ausdruck (1) bezeichnet tₕ eine Steuerungszeit (s) einer Energieumwandlungsvorrichtung (52, 62, 64, 66, 68), bezeichnet E_{max-α_i} eine obere Energiespeichergrenzmenge (Wh) einer i-ten vorgelagerten Energiespeichervorrichtung (54, 63, 65, 67), bezeichnet E_{min-α_i} eine untere Energiespeichergrenzmenge (Wh) der i-ten vorgelagerten Energiespeichervorrichtung (54, 63, 65, 67), bezeichnet E_{now-α_i} eine gegenwärtige Energiespeichermenge (Wh) der i-ten vorgelagerten Energiespeichervorrichtung (54, 63, 65, 67), bezeichnet P_{er-α_i} eine Differenz zwischen einer geschätzten Eingabe/Ausgabe und einer tatsächlichen Eingabe/Ausgabe (W) in und von der i-ten vorgelagerten Energiespeichervorrichtung (54, 63, 65, 67), bezeichnet E_{max-β_j} eine obere Energiespeichergrenzmenge (Wh) einer j-ten nachgelagerten Energiespeichervorrichtung (53, 63, 65, 67), bezeichnet E_{min-β_j} eine untere Energiespeichergrenzmenge (Wh) der j-ten nachgelagerten Energiespeichervorrichtung (53, 63, 65, 67), bezeichnet E_{now-β_j} eine gegenwärtige Energiespeichermenge (Wh) der j-ten nachgelagerten Energiespeichervorrichtung (53, 63, 65, 67), bezeichnet P_{er-β_j} eine Differenz zwischen einer geschätzten Eingabe/Ausgabe und einer tatsächlichen Eingabe/Ausgabe (W) in und von der j-ten nachgelagerten Energiespeichervorrichtung (53, 63, 65, 67), sind i und j ganze Zahlen nicht kleiner als 1, bezeichnet nᵢ eine Anzahl vorgelagerter Energiespeichervorrichtungen (52, 62, 64, 66, 68) und bezeichnet nⱼ eine Anzahl nachgelagerter Energiespeichervorrichtungen (53, 63, 65, 67)).

2. Energiemanagementeinrichtung (70) nach Anspruch 1, bei der das Managementobjekt eine Einheit umfasst, die eine Mehrzahl von Energiespeichervorrichtungen (72, 73) umfasst,
der Informationserlangungsabschnitt (70A) eine Information hinsichtlich Differenzen zwischen einer gegenwärtigen Energiespeichermenge und einem oberen Grenzwert und einem unteren Grenzwert einer Energiespeichermenge in einer spezifischen Energiespeichervorrichtung (72) unter der Mehrzahl von Energiespeichervorrichtungen (72, 73) und hinsichtlich Differenzen zwischen einer gegenwärtigen Energiespeichermenge und einem oberen Grenzwert und einem unteren Grenzwert einer Energiespeichermenge in einer Energiespeichervorrichtung (73), die mit der spezifischen Energiespeichervorrichtung (72) verbunden ist, erlangt, und
der Befehlsabschnitt (70C) eine Steuerungszeit der spezifischen Energiespeichervorrichtung (72) und eine Energieaustauschmenge in der spezifischen Energiespeichervorrichtung (72) basierend auf der Information hinsichtlich der Differenzen, die durch den Informationserlangungsabschnitt (70A) erlangt wird, bestimmt.

3. Energiemanagementeinrichtung (70) nach Anspruch 2, bei der
der Befehlsabschnitt (70C) Ausdruck (2) zum Bestimmen einer Steuerungszeit tₕ der spezifischen Energiespeichervorrichtung verwendet:
[Math. 2] ${t}_{h} = Min \left(\begin{matrix}Min \left(\frac{{E}_{max - γ} - {E}_{now - γ}}{{P}_{er - γ}}, \frac{{E}_{now - γ} - {E}_{min - γ}}{{P}_{er - γ}}\right) \\ , Min \left({\sum }_{i = 1}^{{n}_{i}} \left(\frac{{E}_{max - δ _ i} - {E}_{now - δ _ i}}{{P}_{er - δ _ i}}\right) , {\sum }_{i = 1}^{{n}_{i}} \left(\frac{{E}_{now - δ _ i} - {E}_{min - δ _ i}}{{P}_{er - δ _ i}}\right)\right)\end{matrix}\right)$ (2) (in Ausdruck (2) bezeichnet tₕ eine Steuerungszeit (s) einer spezifischen Energiespeichervorrichtung (72), bezeichnet E_{max-γ} eine obere Energiespeichergrenzmenge (Wh) der spezifischen Energiespeichervorrichtung (72), bezeichnet E_{min-γ} eine untere Energiespeichergrenzmenge (Wh) der spezifischen Energiespeichervorrichtung (72), bezeichnet E_{now-γ}, eine gegenwärtige Energiespeichermenge (Wh) der spezifischen Energiespeichervorrichtung (72), bezeichnet P_{er-γ} eine Differenz zwischen einer geschätzten Eingabe/Ausgabe und einer tatsächlichen Eingabe/Ausgabe (W) der spezifischen Energiespeichervorrichtung (72), bezeichnet E_{max-δ_i} eine obere Energiespeichergrenzmenge (Wh) einer i-ten Energiespeichervorrichtung (73), die mit der spezifischen Energiespeichervorrichtung (72) verbunden ist, bezeichnet E_{min-δ_i} eine untere Energiespeichergrenzmenge (Wh) der i-ten Energiespeichervorrichtung (73), die mit der spezifischen Energiespeichervorrichtung (72) verbunden ist, bezeichnet E_{now-δ_i} eine gegenwärtige Energiespeichermenge (Wh) der i-ten Energiespeichervorrichtung (73), die mit der spezifischen Energiespeichervorrichtung (72) verbunden ist, bezeichnet P_{er-δ_i} eine Differenz zwischen einer geschätzten Eingabe/Ausgabe und einer tatsächlichen Eingabe/Ausgabe (W) der i-ten Energiespeichervorrichtung (73), die mit der spezifischen Energiespeichervorrichtung (72) verbunden ist, ist i eine ganze Zahl nicht kleiner als 1 und bezeichnet nᵢ eine Anzahl von Energiespeichervorrichtungen (73), die mit der spezifischen Energiespeichervorrichtung (72) verbunden sind).

4. Energiemanagementeinrichtung (50, 60, 70) nach einem der Ansprüche 1 bis 3, bei der der Befehlsabschnitt (50C, 60C, 70C) Ausdruck (3) zum Bestimmen einer Energieaustauschmenge E in dem Managementobjekt (52, 54, 62, 64, 66, 68, 72) verwendet:
[Math. 3] $E = {\int }_{{t}_{now}}^{{t}_{now + {t}_{h}}} {P}_{op _ ε} dt$ (3) (in Ausdruck (3) bezeichnet t_{now} eine gegenwärtige Zeit (s), bezeichnet tₕ eine Steuerungszeit (s) des Managementobjekts und bezeichnet P_{op_ε} einen Betriebsplanausgabewert (W) des Managementobjekts).

5. Energiemanagementeinrichtung (50, 60, 70) nach einem der Ansprüche 1 bis 4, bei der, wenn die Steuerungszeit nicht länger als ein vorbestimmter Wert ist, die Energiemanagementvorrichtung (50, 60, 70) aufhört, den Befehl hinsichtlich der Steuerungszeit und der Energieaustauschmenge an das Managementobjekt (52, 54, 62, 64, 66, 68, 72) zu geben.

6. Energiemanagementsystem (1B, 1C, 1D, 1E), mit:
einer Vorrichtungsenergiemanagementeinrichtung (50, 60, 70), die dazu ausgebildet ist, einen Befehl hinsichtlich einer Steuerungszeit einer oder mehrerer Vorrichtungen (52, 54, 62, 64, 66, 68, 72) und einer Energieaustauschmenge in der Steuerungszeit an die eine oder mehreren Vorrichtungen (52, 54, 62, 64, 66, 68, 72) zu geben; und
einer Einheitenenergiemanagementeinrichtung (5), die dazu ausgebildet ist, eine Energie einer Einheit (10D, 10E, 10F), die die eine oder mehreren Vorrichtungen (52, 54, 62, 64, 66, 68, 72) und die Vorrichtungsenergiemanagementeinrichtung (50, 60, 70) umfasst, zu managen, und dazu ausgebildet ist, einen Befehl hinsichtlich einer Steuerungszeit der Einheit und einer Energieaustauschmenge in der Steuerungszeit an die Vorrichtungsenergiemanagementeinrichtung (50, 60, 70) zu geben, bei dem
die eine oder mehreren Vorrichtungen (52, 54, 62, 64, 66, 68) eine Einheit bilden, die eine Energieumwandlungsvorrichtung (52, 62, 64, 66, 68), eine vorgelagerte Energiespeichervorrichtung (54, 63, 65, 67), die mit einer vorgelagerten Seite der Energieumwandlungsvorrichtung (52, 62, 64, 66, 68) in einer Energietransferrichtung verbunden ist, und eine nachgelagerte Energiespeichervorrichtung (53, 63, 65, 67), die mit einer nachgelagerten Seite der Energieumwandlungsvorrichtung (52, 62, 64, 66, 68) in der Energietransferrichtung verbunden ist, umfasst,
welche Vorrichtungsenergiemanagementeinrichtung (50, 60) umfasst:
einen Informationserlangungsabschnitt (50A, 60A), der dazu ausgebildet ist, eine Information hinsichtlich eines Betriebszustands der einen oder mehreren Vorrichtungen (52, 54, 62, 64, 66, 68) zu erlangen;
einen Planungsabschnitt (50B, 60B), der dazu ausgebildet ist, einen Betriebsplan der einen oder mehreren Vorrichtungen zu erlangen; und
einen Befehlsabschnitt (50C, 60C), der dazu ausgebildet ist, eine Steuerungszeit (tₕ) der einen oder mehreren Vorrichtungen und eine Energieaustauschmenge (E) in der Steuerungszeit unter Verwendung der Information, die durch den Informationserlangungsabschnitt (50A, 60A) erlangt wird, und des Betriebsplans, der durch den Planungsabschnitt (50B, 60B) erlangt wird, zu bestimmen, bei dem
die Vorrichtungsenergiemanagementeinrichtung (50, 60) einen Befehl hinsichtlich der Steuerungszeit (tₕ) der einen oder mehreren Vorrichtungen und der Energieaustauschmenge (E) in der Steuerungszeit an die eine oder mehreren Vorrichtungen gibt,
der Informationserlangungsabschnitt (50A, 60A) eine Information hinsichtlich Differenzen zwischen einer gegenwärtigen Energiespeichermenge und einem oberen Grenzwert und einem unteren Grenzwert einer Energiespeichermenge in der vorgelagerten Energiespeichervorrichtung (54, 63, 65, 67) und hinsichtlich Differenzen zwischen einer gegenwärtigen Energiespeichermenge und einem oberen Grenzwert und einem unteren Grenzwert einer Energiespeichermenge in der nachgelagerten Energiespeichervorrichtung (53, 63, 65, 67) erlangt, und
der Befehlsabschnitt (50C, 60C) eine Steuerungszeit (tₕ) der Energieumwandlungsvorrichtung (52, 62, 64, 66, 68) und eine Energieaustauschmenge (E) in der Energieumwandlungsvorrichtung (52, 62, 64, 66, 68) unter Verwendung der Information hinsichtlich der Differenzen, die durch den Informationserlangungsabschnitt (50A, 60A) erlangt wird, bestimmt,
der Befehlsabschnitt (50C, 60C) Ausdruck (1) zum Bestimmen einer Steuerungszeit tₕ der Energieumwandlungsvorrichtung (52, 62, 64, 66, 68) verwendet:
[Math. 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1)
(in Ausdruck (1) bezeichnet tₕ eine Steuerungszeit (s) einer Energieumwandlungsvorrichtung (52, 62, 64, 66, 68), bezeichnet E_{max-α_i} eine obere Energiespeichergrenzmenge (Wh) einer i-ten vorgelagerten Energiespeichervorrichtung (54, 63, 65, 67), bezeichnet E_{min-α_i} eine untere Energiespeichergrenzmenge (Wh) der i-ten vorgelagerten Energiespeichervorrichtung (54, 63, 65, 67), bezeichnet E_{now-α_i} eine gegenwärtige Energiespeichermenge (Wh) der i-ten vorgelagerten Energiespeichervorrichtung (54, 63, 65, 67), bezeichnet P_{er-α_i} eine Differenz zwischen einer geschätzten Eingabe/Ausgabe und einer tatsächlichen Eingabe/Ausgabe (W) in und von der i-ten vorgelagerten Energiespeichervorrichtung (54, 63, 65, 67), bezeichnet E_{max-β_j} eine obere Energiespeichergrenzmenge (Wh) einer j-ten nachgelagerten Energiespeichervorrichtung (53, 63, 65, 67), bezeichnet E_{min-β_j} eine untere Energiespeichergrenzmenge (Wh) der j-ten nachgelagerten Energiespeichervorrichtung (53, 63, 65, 67), bezeichnet E_{now-β_j} eine gegenwärtige Energiespeichermenge (Wh) der j-ten nachgelagerten Energiespeichervorrichtung (53, 63, 65, 67), bezeichnet P_{er-β_j} eine Differenz zwischen einer geschätzten Eingabe/Ausgabe und einer tatsächlichen Eingabe/Ausgabe (W) in und von der j-ten nachgelagerten Energiespeichervorrichtung (53, 63, 65, 67), sind i und j ganze Zahlen nicht kleiner als 1, bezeichnet nᵢ eine Anzahl vorgelagerter Energiespeichervorrichtungen (52, 62, 64, 66, 68) und bezeichnet nⱼ eine Anzahl nachgelagerter Energiespeichervorrichtungen (53, 63, 65, 67)).

7. Energiemanagementverfahren zum Bewirken, dass eine Energie eines Managementobjekts (10D, 10E, 10F) durch eine Energiemanagementeinrichtung (5, 6) gemanagt wird, umfassend:
Geben eines Befehls hinsichtlich einer Steuerungszeit (tₕ) des Managementobjekts und einer Energieaustauschmenge (E) in der Steuerungszeit an das Managementobjekt, bei dem das Managementobjekt eine oder mehrere Einheiten (10D, 10E, 10F) ist, die eine Mehrzahl von Vorrichtungen (52, 54, 62, 64, 66, 68, 72) und eine andere Energiemanagementeinrichtung (50, 60, 70), die dazu ausgebildet ist, Energien der Mehrzahl von Vorrichtungen zu managen, umfassen, bei dem
die Mehrzahl von Vorrichtungen (52, 54, 62, 64, 66, 68) eine Einheit bildet, die eine Energieumwandlungsvorrichtung (52, 62, 64, 66, 68), eine vorgelagerte Energiespeichervorrichtung (54, 63, 65, 67), die mit einer vorgelagerten Seite der Energieumwandlungsvorrichtung (52, 62, 64, 66, 68) in einer Energietransferrichtung verbunden ist, und eine nachgelagerte Energiespeichervorrichtung (53, 63, 65, 67), die mit einer nachgelagerten Seite der Energieumwandlungsvorrichtung (52, 62, 64, 66, 68) in der Energietransferrichtung verbunden ist, umfasst,
welche andere Energiemanagementeinrichtung (50, 60) umfasst:
einen Informationserlangungsabschnitt (50A, 60A), der dazu ausgebildet ist, eine Information hinsichtlich eines Betriebszustands der Mehrzahl von Vorrichtungen (52, 54, 62, 64, 66, 68) zu erlangen;
einen Planungsabschnitt (50B, 60B), der dazu ausgebildet ist, einen Betriebsplan der Mehrzahl von Vorrichtungen zu erlangen; und
einen Befehlsabschnitt (50C, 60C), der dazu ausgebildet ist, eine Steuerungszeit (tₕ) der Mehrzahl von Vorrichtungen und eine Energieaustauschmenge (E) in der Steuerungszeit unter Verwendung der Information, die durch den Informationserlangungsabschnitt (50A, 60A) erlangt wird, und des Betriebsplans, der durch den Planungsabschnitt (50B, 60B) erlangt wird, zu bestimmen, bei dem
die andere Energiemanagementeinrichtung (50, 60) einen Befehl hinsichtlich der Steuerungszeit (tₕ) der einen oder mehreren Vorrichtungen und der Energieaustauschmenge (E) in der Steuerungszeit an die eine oder mehreren Vorrichtungen gibt,
der Informationserlangungsabschnitt (50A, 60A) eine Information hinsichtlich Differenzen zwischen einer gegenwärtigen Energiespeichermenge und einem oberen Grenzwert und einem unteren Grenzwert einer Energiespeichermenge in der vorgelagerten Energiespeichervorrichtung (54, 63, 65, 67) und hinsichtlich Differenzen zwischen einer gegenwärtigen Energiespeichermenge und einem oberen Grenzwert und einem unteren Grenzwert einer Energiespeichermenge in der nachgelagerten Energiespeichervorrichtung (53, 63, 65, 67) erlangt, und
der Befehlsabschnitt (50C, 60C) eine Steuerungszeit (tₕ) der Energieumwandlungsvorrichtung (52, 62, 64, 66, 68) und eine Energieaustauschmenge (E) in der Energieumwandlungsvorrichtung (52, 62, 64, 66, 68) unter Verwendung der Information hinsichtlich der Differenzen, die durch den Informationserlangungsabschnitt (50A, 60A) erlangt wird, bestimmt,
der Befehlsabschnitt (50C, 60C) Ausdruck (1) zum Bestimmen einer Steuerungszeit tₕ der Energieumwandlungsvorrichtung (52, 62, 64, 66, 68) verwendet:
[Math. 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1)
(in Ausdruck (1) bezeichnet tₕ eine Steuerungszeit (s) einer Energieumwandlungsvorrichtung (52, 62, 64, 66, 68), bezeichnet E_{max-α_i} eine obere Energiespeichergrenzmenge (Wh) einer i-ten vorgelagerten Energiespeichervorrichtung (54, 63, 65, 67), bezeichnet E_{min-α_i} eine untere Energiespeichergrenzmenge (Wh) der i-ten vorgelagerten Energiespeichervorrichtung (54, 63, 65, 67), bezeichnet E_{now-α_i} eine gegenwärtige Energiespeichermenge (Wh) der i-ten vorgelagerten Energiespeichervorrichtung (54, 63, 65, 67), bezeichnet P_{er-α_i} eine Differenz zwischen einer geschätzten Eingabe/Ausgabe und einer tatsächlichen Eingabe/Ausgabe (W) in und von der i-ten vorgelagerten Energiespeichervorrichtung (54, 63, 65, 67), bezeichnet E_{max-β_j} eine obere Energiespeichergrenzmenge (Wh) einer j-ten nachgelagerten Energiespeichervorrichtung (53, 63, 65, 67), bezeichnet E_{min-β_j} eine untere Energiespeichergrenzmenge (Wh) der j-ten nachgelagerten Energiespeichervorrichtung (53, 63, 65, 67), bezeichnet E_{now-β_j} eine gegenwärtige Energiespeichermenge (Wh) der j-ten nachgelagerten Energiespeichervorrichtung (53, 63, 65, 67), bezeichnet P_{er-β_j} eine Differenz zwischen einer geschätzten Eingabe/Ausgabe und einer tatsächlichen Eingabe/Ausgabe (W) in und von der j-ten nachgelagerten Energiespeichervorrichtung (53, 63, 65, 67), sind i und j ganze Zahlen nicht kleiner als 1, bezeichnet nᵢ eine Anzahl vorgelagerter Energiespeichervorrichtungen (52, 62, 64, 66, 68) und bezeichnet nⱼ eine Anzahl nachgelagerter Energiespeichervorrichtungen (53, 63, 65, 67)).

8. Computerprogramm, das bewirkt, dass ein Computer eine Energie eines Managementobjekts (10D, 10E, 10F) managet, bei dem
das Managementobjekt eine oder mehrere Einheiten (10D, 10E, 10F) ist, die eine Mehrzahl von Vorrichtungen (52, 54, 62, 64, 66, 68, 72) und eine andere Energiemanagementeinrichtung (50, 60, 70), die dazu ausgebildet ist, Energien der Mehrzahl von Vorrichtungen zu managen, umfassen,
das Computerprogramm bewirkt, dass der Computer eine Funktion zum Geben eines Befehls hinsichtlich einer Steuerungszeit des Managementobjekts und einer Energieaustauschmenge in der Steuerungszeit an das Managementobjekt durchführt,
die Mehrzahl von Vorrichtungen (52, 54, 62, 64, 66, 68) eine Einheit bildet, die eine Energieumwandlungsvorrichtung (52, 62, 64, 66, 68), eine vorgelagerte Energiespeichervorrichtung (54, 63, 65, 67), die mit einer vorgelagerten Seite der Energieumwandlungsvorrichtung (52, 62, 64, 66, 68) in einer Energietransferrichtung verbunden ist, und eine nachgelagerte Energiespeichervorrichtung (53, 63, 65, 67), die mit einer nachgelagerten Seite der Energieumwandlungsvorrichtung (52, 62, 64, 66, 68) in der Energietransferrichtung verbunden ist, umfasst,
die andere Energiemanagementeinrichtung (50, 60) umfasst:
einen Informationserlangungsabschnitt (50A, 60A), der dazu ausgebildet ist, eine Information hinsichtlich eines Betriebszustands der Mehrzahl von Vorrichtungen (52, 54, 62, 64, 66, 68) zu erlangen;
einen Planungsabschnitt (50B, 60B), der dazu ausgebildet ist, einen Betriebsplan der Mehrzahl von Vorrichtungen zu erlangen; und
einen Befehlsabschnitt (50C, 60C), der dazu ausgebildet ist, eine Steuerungszeit (tₕ) der Mehrzahl von Vorrichtungen und eine Energieaustauschmenge (E) in der Steuerungszeit unter Verwendung der Information, die durch den Informationserlangungsabschnitt (50A, 60A) erlangt wird, und des Betriebsplans, der durch den Planungsabschnitt (50B, 60B) erlangt wird, zu bestimmen, bei dem
die andere Energiemanagementvorrichtung (50, 60) einen Befehl hinsichtlich der Steuerungszeit (tₕ) der einen oder mehreren Vorrichtungen und der Energieaustauschmenge (E) in der Steuerungszeit an die eine oder mehreren Vorrichtungen gibt,
welcher Informationserlangungsabschnitt (50A, 60A) eine Information hinsichtlich Differenzen zwischen einer gegenwärtigen Energiespeichermenge und einem oberen Grenzwert und einem unteren Grenzwert einer Energiespeichermenge in der vorgelagerten Energiespeichervorrichtung (54, 63, 65, 67) und hinsichtlich Differenzen zwischen einer gegenwärtigen Energiespeichermenge und einem oberen Grenzwert und einem unteren Grenzwert einer Energiespeichermenge in der nachgelagerten Energiespeichervorrichtung (53, 63, 65, 67) erlangt, und der Befehlsabschnitt (50C, 60C) eine Steuerungszeit (tₕ) der Energieumwandlungsvorrichtung (52, 62, 64, 66, 68) und eine Energieaustauschmenge (E) in der Energieumwandlungsvorrichtung (52, 62, 64, 66, 68) unter Verwendung der Information hinsichtlich der Differenzen, die durch den Informationserlangungsabschnitt (50A, 60A) erlangt wird, bestimmt,
der Befehlsabschnitt (50C, 60C) Ausdruck (1) zum Bestimmen einer Steuerungszeit tₕ der Energieumwandlungsvorrichtung (52, 62, 64, 66, 68) verwendet:
[Math. 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1)
(in Ausdruck (1) bezeichnet tₕ eine Steuerungszeit (s) einer Energieumwandlungsvorrichtung (52, 62, 64, 66, 68), bezeichnet E_{max-α_i} eine obere Energiespeichergrenzmenge (Wh) einer i-ten vorgelagerten Energiespeichervorrichtung (54, 63, 65, 67), bezeichnet E_{min-α_i} eine untere Energiespeichergrenzmenge (Wh) der i-ten vorgelagerten Energiespeichervorrichtung (54, 63, 65, 67), bezeichnet E_{now-α_i} eine gegenwärtige Energiespeichermenge (Wh) der i-ten vorgelagerten Energiespeichervorrichtung (54, 63, 65, 67), bezeichnet P_{er-α_i} eine Differenz zwischen einer geschätzten Eingabe/Ausgabe und einer tatsächlichen Eingabe/Ausgabe (W) in und von der i-ten vorgelagerten Energiespeichervorrichtung (54, 63, 65, 67), bezeichnet E_{max-β_j} eine obere Energiespeichergrenzmenge (Wh) einer j-ten nachgelagerten Energiespeichervorrichtung (53, 63, 65, 67), bezeichnet E_{min-β_j} eine untere Energiespeichergrenzmenge (Wh) der j-ten nachgelagerten Energiespeichervorrichtung (53, 63, 65, 67), bezeichnet E_{now-β_j} eine gegenwärtige Energiespeichermenge (Wh) der j-ten nachgelagerten Energiespeichervorrichtung (53, 63, 65, 67), bezeichnet P_{er-β_j} eine Differenz zwischen einer geschätzten Eingabe/Ausgabe und einer tatsächlichen Eingabe/Ausgabe (W) in und von der j-ten nachgelagerten Energiespeichervorrichtung (53, 63, 65, 67), sind i und j ganze Zahlen nicht kleiner als 1, bezeichnet nᵢ eine Anzahl vorgelagerter Energiespeichervorrichtungen (52, 62, 64, 66, 68) und bezeichnet nⱼ eine Anzahl nachgelagerter Energiespeichervorrichtungen (53, 63, 65, 67)).

## Revendications

1. Appareil (50, 60, 70) de gestion d'énergie configuré pour gérer l'énergie d'un objet de gestion (52, 54, 62, 64, 66, 68, 72), où
l'objet de gestion comprend une unité comprenant un dispositif de conversion d'énergie (52, 62, 64, 66, 68), un dispositif de stockage d'énergie côté amont connecté à un côté amont du dispositif de conversion d'énergie (52, 62, 64, 66, 68) dans un sens de transfert d'énergie et un dispositif de stockage d'énergie côté aval (53, 63, 65, 67) connecté à un côté aval du dispositif de conversion d'énergie (52, 62, 64, 66, 68) dans un sens de transfert d'énergie,
l'appareil (50, 60, 70) de gestion d'énergie comprenant :
une partie d'obtention d'informations (50A, 60A, 70A) configurée pour obtenir des informations concernant un état de fonctionnement de l'objet de gestion (52, 54, 62, 64, 66, 68, 72);
une partie de planification (50B, 60B, 70B) configurée pour obtenir un plan de fonctionnement de l'objet de gestion ; et
une partie de commande (50C, 60C, 70C) configurée pour déterminer un temps de commande (tₕ) de l'objet de gestion et une quantité d'énergie (E) échangée pendant ce temps de commande, en utilisant les informations obtenues par la partie d'obtention d'informations (50A, 60A, 70A) et le plan de fonctionnement obtenu par la partie de planification (50B, 60B, 70B), où
l'appareil (50, 60, 70) de gestion d'énergie donne une commande concernant le temps de commande (tₕ) de l'objet de gestion et la quantité d'énergie (E) échangée pendant le temps de commande, à l'objet de gestion,
la partie d'obtention d'informations (50A, 60A) recueille des informations concernant les différences entre une quantité actuelle d'énergie stockée et une valeur limite supérieure et une valeur limite inférieure d'une quantité d'énergie stockée dans le dispositif de stockage d'énergie côté amont (54, 63, 65, 67), ainsi que concernant des différences entre une quantité actuelle d'énergie stockée et une valeur limite supérieure et une valeur limite inférieure d'une quantité d'énergie stockée dans le dispositif de stockage d'énergie côté aval (53, 63, 65, 67), et
la partie de commande (50C, 60C) détermine un temps de commande (tₕ) du dispositif de conversion d'énergie (52, 62, 64, 66, 68) et une quantité d'énergie (E) échangée dans le dispositif de conversion d'énergie (52, 62, 64, 66, 68) en utilisant les informations relatives aux différences obtenues par la partie d'obtention d'informations (50A, 60A),
la partie de commande (50C, 60C) utilise l'Expression (1) pour déterminer un temps de commande tₕ du dispositif de conversion d'énergie (52, 62, 64, 66, 68) :
[Math, 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1) (dans l'Expression (1), tₕ désigne un temps de commande (s) d'un dispositif de conversion d'énergie (52, 62, 64, 66, 68), E_{max-α_i} désigne une limite supérieure de quantité d'énergie stockée (Wh) du i-ème dispositif de stockage d'énergie côté amont (54, 63, 65, 67), E_{min-α_i} désigne une limite inférieure de quantité d'énergie stockée (Wh) du i-ème dispositif de stockage d'énergie côté amont (54, 63, 65, 67), E_{now-α_i} désigne une quantité actuelle d'énergie stockée (Wh) du i-ème dispositif de stockage d'énergie côté amont (54, 63, 65, 67), P_{er-α_i} désigne une différence entre une entrée-sortie estimée et une entrée-sortie actuelle (W) dans et depuis i-ème dispositif de stockage d'énergie côté amont (54, 63, 65, 67), E_{max-β_j} désigne une limite supérieure de quantité d'énergie stockée (Wh) d'un j-ème dispositif de stockage d'énergie côté aval (53, 63, 65, 65), E_{min-β_j} désigne une limite inférieure de quantité d'énergie stockée (Wh) du j-ème dispositif de stockage d'énergie côté aval (53, 63, 65, 67), E_{now-β_j} désigne une quantité actuelle d'énergie stockée (Wh) du j-ème dispositif de stockage d'énergie côté aval (53, 63, 65, 67), P_{er-β_j} désigne une différence entre une entrée-sortie estimée et une entrée-sortie actuelle (W) dans et depuis le j-ème dispositif de stockage d'énergie côté aval (53, 63, 65, 67), i et j sont des entiers supérieurs ou égaux à 1, nᵢ désigne un nombre de dispositifs de stockage d'énergie côté amont (52, 62, 64, 66, 68) et nⱼ désigne un nombre de dispositifs de stockage d'énergie côté aval (53, 63, 65, 67).

2. Appareil (70) de gestion d'énergie selon la revendication 1, dans lequel
l'objet de gestion comprend une unité comprenant une pluralité de dispositifs de stockage d'énergie (72,73),
la partie d'obtention d'informations (70A) recueille des informations concernant des différences entre une quantité actuelle d'énergie stockée et une valeur limite supérieure et une valeur limite inférieure d'une quantité d'énergie stockée dans un dispositif de stockage d'énergie spécifique (72) parmi la pluralité de dispositifs de stockage d'énergie (72,73), ainsi que concernant des différences entre une quantité actuelle d'énergie stockée et une valeur limite supérieure et une valeur limite inférieure d'une quantité d'énergie stockée dans un dispositif de stockage d'énergie (73) connecté au dispositif de stockage d'énergie spécifique (72), et
la partie de commande (70C) détermine un temps de commande du dispositif de stockage d'énergie spécifique (72) et une quantité d'échange d'énergie dans le dispositif de stockage d'énergie spécifique (72), sur la base des informations relatives aux différences obtenues par la partie d'obtention d'informations (70A).

3. Appareil (70) de gestion d'énergie selon la revendication 2, dans lequel
la partie de commande (70C) utilise l'Expression (2) pour déterminer un temps de commande tₕ du dispositif de stockage d'énergie spécifique
[Math. 2] ${t}_{h} = Min \left(\begin{matrix}Min \left(\frac{{E}_{max - γ} - {E}_{now - γ}}{{P}_{er - γ}}, \frac{{E}_{now - γ} - {E}_{min - γ}}{{P}_{er - γ}}\right) \\ , Min \left({\sum }_{i = 1}^{{n}_{i}} \left(\frac{{E}_{max - δ _ i} - {E}_{now - δ _ i}}{{P}_{er - δ _ i}}\right) , {\sum }_{i = 1}^{{n}_{i}} \left(\frac{{E}_{now - δ _ i} - {E}_{min - δ _ i}}{{P}_{er - δ _ i}}\right)\right)\end{matrix}\right)$ (2) (dans l'Expression (2), tₕ désigne un temps de commande (s) d'un dispositif de stockage d'énergie spécifique (72), E_{max-γ} désigne une limite supérieure de quantité d'énergie stockée (Wh) du dispositif de stockage d'énergie spécifique (72), E_{min-γ} désigne une limite inférieure de quantité d'énergie stockée (Wh) du dispositif de stockage d'énergie spécifique (72), E _{now-γ} désigne une quantité actuelle d'énergie stockée (Wh) du dispositif de stockage d'énergie spécifique (72), P_{er-γ} désigne une différence entre une entrée-sortie estimée et une entrée-sortie actuelle (W) du dispositif de stockage d'énergie spécifique (72), E_{max-δ_i} désigne une limite supérieure de quantité d'énergie stockée (Wh) du i-ème dispositif de stockage d'énergie (73) connecté au dispositif de stockage d'énergie spécifique (72), E_{min-δ_i} désigne une limite inférieure de quantité d'énergie stockée (Wh) du i-ème dispositif de stockage d'énergie (73) connecté au dispositif de stockage d'énergie spécifique (72), E_{now-δ_i} désigne une quantité actuelle d'énergie stockée (Wh) du i-ème dispositif de stockage d'énergie (73) connecté au dispositif de stockage d'énergie spécifique (72), P_{er-δ_i} désigne une différence entre une entrée-sortie estimée et une entrée-sortie actuelle (W) du i-ème dispositif de stockage d'énergie (73) connecté au dispositif de stockage d'énergie spécifique (72), i est un entier supérieur ou égal à 1, et nᵢ désigne un nombre de dispositifs de stockage d'énergie (73) connectés au dispositif de stockage d'énergie spécifique (72).

4. Appareil (50, 60, 70) de gestion d'énergie selon l'une quelconque des revendications 1 à 3, dans lequel
la partie de commande (50C, 60C, 70C) utilise l'Expression (3) pour déterminer une quantité d'échange d'énergie E dans l'objet de gestion (52, 54, 62, 64, 66, 68, 72) :
[Math. 3] $E = {\int }_{{t}_{now}}^{{t}_{now + {t}_{h}}} {P}_{op _ ε} dt$ (3) (dans l'Expression (3), t_{now} désigne un temps actuel (s), tₕ désigne un temps de commande (s) de l'objet de gestion, et P_{op_ε} désigne une valeur de sortie de plan de fonctionnement (W) de l'objet de gestion.)

5. Appareil (50, 60, 70) de gestion d'énergie selon l'une quelconque des revendications 1 à 4,
lorsque le temps de commande n'est pas supérieur à une valeur prédéterminée, l'appareil (50, 60, 70) de gestion d'énergie cesse de donner la commande en ce qui concerne le temps de commande et la quantité d'échange d'énergie, à l'objet de gestion (52, 54, 62, 64, 66, 68, 72).

6. Système de gestion d'énergie (1B,1C,1D,1E), comprenant :
un appareil (50, 60, 70) de gestion d'énergie de dispositif configuré pour transmettre une commande relative à un temps de commande d'un ou plusieurs dispositifs (52, 54, 62, 64, 66, 68, 72) et à une quantité d'énergie échangée pendant ce temps de commande, audit un ou plusieurs dispositifs (52, 54, 62, 64, 66, 68, 72) ; et
un appareil (5) de gestion d'énergie unitaire configuré pour gérer l'énergie d'une unité (10D, 10E, 10F) comprenant ledit un ou plusieurs dispositifs (52, 54, 62, 64, 66, 68, 72) et l'appareil (50, 60, 70) de gestion d'énergie de dispositif, et configuré pour donner une commande relative à un temps de commande de l'unité et à une quantité d'énergie échangée pendant le temps de commande, à l'appareil de gestion d'énergie de dispositif (50, 60, 70), où
ledit un ou plusieurs dispositifs (52, 54, 62, 64, 66, 68) constituent une unité comprenant un dispositif de conversion d'énergie (52, 62, 64, 66, 68), un dispositif de stockage d'énergie côté amont (54, 63, 65, 67) connecté à un côté amont du dispositif de conversion d'énergie (52, 62, 64, 66, 68) dans un sens de transfert d'énergie et un dispositif de stockage d'énergie côté aval (53, 63, 65, 67) connecté à un côté aval du dispositif de conversion d'énergie (52, 62, 64, 66, 68) dans le sens de transfert d'énergie,
l'appareil (50, 60) de gestion d'énergie de dispositif comprenant :
une partie d'obtention d'informations (50A, 60A) configurée pour obtenir des informations concernant un état de fonctionnement dudit un ou plusieurs dispositifs (52, 54, 62, 64, 66, 68) ;
une partie de planification (50B, 60B) configurée pour obtenir un plan de fonctionnement dudit un ou plusieurs dispositifs ; et
une partie de commande (50C, 60C) configurée pour déterminer un temps de commande (tₕ) dudit un ou plusieurs dispositifs et une quantité d'énergie (E) échangée pendant le temps de commande, en utilisant les informations obtenues par la partie d'obtention d'informations (50A, 60A) et le plan de fonctionnement obtenu par la partie de planification (50B, 60B), où
l'appareil (50,60) de gestion d'énergie de dispositif transfère une commande concernant le temps de commande (tₕ) dudit un ou plusieurs dispositifs et la quantité d'énergie (E) échangée pendant le temps de commande, audit un ou plusieurs dispositifs,
la partie d'obtention d'informations (50A, 60A) recueille des informations concernant des différences entre une quantité actuelle d'énergie stockée et une valeur limite supérieure et une valeur limite inférieure d'une quantité d'énergie stockée dans le dispositif de stockage d'énergie côté amont (54, 63, 65, 67), ainsi que concernant des différences entre une quantité actuelle d'énergie stockée et une valeur limite supérieure et une valeur limite inférieure d'une quantité d'énergie stockée dans le dispositif de stockage d'énergie côté aval (53, 63, 65, 67), et
la partie de commande (50C, 60C) détermine un temps de commande (tₕ) du dispositif de conversion d'énergie (52, 62, 64, 66, 68) et une quantité d'énergie (E) échangée dans le dispositif de conversion d'énergie (52, 62, 64, 66, 68) en utilisant les informations relatives aux différences obtenues par la partie d'obtention d'informations (50A, 60A),
la partie de commande (50C, 60C) utilise l'Expression (1) pour déterminer un temps de commande tₕ du dispositif de conversion d'énergie (52, 62, 64, 66, 68) :
[Math, 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1) (Dans l'Expression (1), tₕ désigne un temps de commande (s) d'un dispositif de conversion d'énergie (52, 62, 64, 66, 68), E_{max-α_i} désigne une limite supérieure de quantité d'énergie stockée (Wh) du i-ème dispositif de stockage d'énergie côté amont (54, 63, 65, 67), E_{min-α_i} désigne une limite inférieure de quantité d'énergie stockée (Wh) du i-ème dispositif de stockage d'énergie côté amont (54, 63, 65, 67), E_{now-α_i} désigne une quantité actuelle d'énergie stockée (Wh) du i-ème dispositif de stockage d'énergie côté amont (54, 63, 65, 67), P_{er-α_i} désigne une différence entre une entrée-sortie estimée et une entrée-sortie actuelle (W) dans et depuis le i-ème dispositif de stockage d'énergie côté amont (54, 63, 65, 67), E_{max-β_j} désigne une limite supérieure de quantité d'énergie stockée (Wh) du j-ème dispositif de stockage d'énergie côté aval (54, 63, 65, 67), E_{min-β_j} désigne une limite inférieure de quantité d'énergie stockée (Wh) du j-ème dispositif de stockage d'énergie côté aval (53, 63, 65, 67), E_{now-β_j} désigne une quantité actuelle d'énergie stockée (Wh) du j-ème dispositif de stockage d'énergie côté aval (53, 63, 65, 67), P_{er-β_j} désigne une différence entre une entrée-sortie estimée et une entrée-sortie actuelle (W) dans et depuis j-ème dispositif de stockage d'énergie côté aval (53, 63, 65, 67), i et j sont des entiers supérieurs ou égaux à 1, nᵢ désigne un nombre de dispositifs de stockage d'énergie côté amont (52, 62, 64, 66, 68) et nⱼ désigne un nombre de dispositifs de stockage d'énergie côté aval (53, 63, 65, 67).

7. Procédé de gestion d'énergie permettant de faire gérer l'énergie d'un objet de gestion (10D, 10E, 10F) par un appareil (5, 6) de gestion d'énergie, le procédé de gestion d'énergie comprenant :
donner une commande concernant un temps de commande (tₕ) de l'objet de gestion et une quantité d'énergie (E) échangée pendant ce temps de commande, à l'objet de gestion, où
l'objet de gestion est une ou plusieurs unités (10D, 10E, 10F) comprenant une pluralité de dispositifs (52, 54, 62, 64, 66, 68, 72), et un autre appareil (50, 60, 70) de gestion d'énergie configuré pour gérer des énergies de la pluralité de dispositifs, où
la pluralité de dispositifs (52, 54, 62, 64, 66, 68) constitue une unité comprenant un dispositif de conversion d'énergie (52, 62, 64, 66, 68), un dispositif de stockage d'énergie côté amont (54, 63, 65, 67) connecté à un côté amont du dispositif de conversion d'énergie (52, 62, 64, 66, 68) dans un sens de transfert d'énergie et un dispositif de stockage d'énergie côté aval (53, 63, 65, 67) connecté à un côté aval du dispositif de conversion d'énergie (52, 62, 64, 66, 68) dans un sens de transfert d'énergie,
l'autre appareil (50, 60) de gestion d'énergie comprenant :
une partie d'obtention d'informations (50A, 60A) configurée pour obtenir des informations concernant un état de fonctionnement de la pluralité de dispositifs (52, 54, 62, 64, 66, 68) ;
une partie de planification (50B, 60B) configurée pour obtenir un plan de fonctionnement de la pluralité de dispositifs ; et
une partie de commande (50C, 60C) configurée pour déterminer un temps de commande (tₕ) de la pluralité de dispositifs et une quantité d'énergie (E) échangée pendant le temps de commande, en utilisant les informations obtenues par la partie d'obtention d'informations (50A, 60A) et le plan de fonctionnement obtenu par la partie de planification (50B, 60B), où
l'autre appareil (50,60) de gestion d'énergie donne une commande concernant le temps de commande (tₕ) dudit un ou plusieurs dispositifs et la quantité d'énergie (E) échangée pendant le temps de commande, audit un ou plusieurs dispositifs,
la partie d'obtention d'informations (50A, 60A) recueille des informations concernant des différences entre une quantité actuelle d'énergie stockée et une valeur limite supérieure et une valeur limite inférieure d'une quantité d'énergie stockée dans le dispositif de stockage d'énergie côté amont (54, 63, 65, 67), ainsi que concernant des différences entre une quantité actuelle d'énergie stockée et une valeur limite supérieure et une valeur limite inférieure d'une quantité d'énergie stockée dans le dispositif de stockage d'énergie côté aval (53, 63, 65, 67), et
la partie de commande (50C, 60C) détermine un temps de commande (tₕ) du dispositif de conversion d'énergie (52, 62, 64, 66, 68) et une quantité d'énergie (E) échangée dans le dispositif de conversion d'énergie (52, 62, 64, 66, 68) en utilisant les informations relatives aux différences obtenues par la partie d'obtention d'informations (50A, 60A),
la partie de commande (50C, 60C) utilise l'Expression (1) pour déterminer un temps de commande tₕ du dispositif de conversion d'énergie (52, 62, 64, 66, 68) :
[Math, 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1) (dans l'Expression (1), tₕ désigne un temps de commande (s) d'un dispositif de conversion d'énergie (52, 62, 64, 66, 68), E_{max-α_i} désigne une limite supérieure de quantité d'énergie stockée (Wh) du i-ème dispositif de stockage d'énergie côté amont (54, 63, 65, 67), E_{min-α_i} désigne une limite inférieure de quantité d'énergie stockée (Wh) du i-ème dispositif de stockage d'énergie côté amont (54, 63, 65, 67), E_{now-α_i} désigne une quantité actuelle d'énergie stockée (Wh) du i-ème dispositif de stockage d'énergie côté amont (54, 63, 65, 67), P_{er-α_i} désigne une différence entre une entrée-sortie estimée et une entrée-sortie actuelle (W) dans et depuis le i-ème dispositif de stockage d'énergie côté amont (54, 63, 65, 67), E_{max-β_j} désigne une limite supérieure de quantité d'énergie stockée (Wh) du j-ème dispositif de stockage d'énergie côté aval (53, 63, 65, 67), E_{min-β_j} désigne une limite inférieure de quantité d'énergie stockée (Wh) du j-ème dispositif de stockage d'énergie côté aval (53, 63, 65, 67), E_{now-β_j} désigne une quantité actuelle d'énergie stockée (Wh) du j-ème dispositif de stockage d'énergie côté aval (53, 63, 65, 67), P_{er-β_j} désigne une différence entre une entrée-sortie estimée et une entrée-sortie actuelle (W) dans et depuis j-ème dispositif de stockage d'énergie côté aval (53, 63, 65, 67), i et j sont des entiers supérieurs ou égaux à 1, nᵢ désigne un nombre de dispositifs de stockage d'énergie côté amont (52, 62, 64, 66, 68) et nⱼ désigne un nombre de dispositifs de stockage d'énergie côté aval (53, 63, 65, 67).

8. Programme informatique qui amène un ordinateur à gérer l'énergie d'un objet de gestion (10D, 10E, 10F), dans lequel
l'objet de gestion est une ou plusieurs unités (10D,10E,10F) comprenant une pluralité de dispositifs (52, 54, 62, 64, 66, 68, 72) et un autre appareil (50, 60, 70) de gestion d'énergie configuré pour gérer des énergies de la pluralité de dispositifs,
le programme informatique qui amène l'ordinateur à exécuter une fonction consistant à donner une commande concernant un temps de commande de l'objet de gestion et une quantité d'énergie échangée pendant ce temps de commande, à l'objet de gestion,
la pluralité de dispositifs (52, 54, 62, 64, 66, 68) constitue une unité comprenant un dispositif de conversion d'énergie (52, 62, 64, 66, 68), un dispositif de stockage d'énergie côté amont (54, 63, 65, 67) connecté à un côté amont du dispositif de conversion d'énergie (52, 62, 64, 66, 68) dans un sens de transfert d'énergie et un dispositif de stockage d'énergie côté aval (53, 63, 65, 67) connecté à un côté aval du dispositif de conversion d'énergie (52, 62, 64, 66, 68) dans un sens de transfert d'énergie,
l'autre appareil (50,60) de gestion d'énergie comprenant :
une partie d'obtention d'informations (50A,60A) configurée pour obtenir des informations concernant un état de fonctionnement de la pluralité de dispositifs (52,54,62,64,66,68) ;
une partie de planification (50B, 60B) configurée pour obtenir un plan de fonctionnement de la pluralité de dispositifs ; et
une partie de commande (50C, 60C) configurée pour déterminer un temps de commande (tₕ) de la pluralité de dispositifs et une quantité d'énergie (E) échangée pendant ce temps de commande, en utilisant les informations obtenues par la partie d'obtention d'informations (50A, 60A) et le plan de fonctionnement obtenu par la partie de planification (50B, 60B), où
l'autre appareil (50,60) de gestion d'énergie donne une commande concernant le temps de commande (tₕ) dudit un ou plusieurs dispositifs et la quantité d'énergie (E) échangée pendant le temps de commande, audit un ou plusieurs dispositifs,
la partie d'obtention d'informations (50A, 60A) recueille des informations concernant les différences entre une quantité actuelle d'énergie stockée et une valeur limite supérieure et une valeur limite inférieure d'une quantité d'énergie stockée dans le dispositif de stockage d'énergie côté amont (54, 63, 65, 67), ainsi que concernant des différences entre une quantité actuelle d'énergie stockée et une valeur limite supérieure et une valeur limite inférieure d'une quantité d'énergie stockée dans le dispositif de stockage d'énergie côté aval (53, 63, 65, 67), et
la partie de commande (50C, 60C) détermine un temps de commande (tₕ) du dispositif de conversion d'énergie (52, 62, 64, 66, 68) et une quantité d'énergie (E) échangée dans le dispositif de conversion d'énergie (52, 62, 64, 66, 68) en utilisant les informations relatives aux différences obtenues par la partie d'obtention d'informations (50A, 60A),
la partie de commande (50C, 60C) utilise l'Expression (1) pour déterminer un temps de commande tₕ du dispositif de conversion d'énergie (52, 62, 64, 66, 68) :
[Math, 1] ${t}_{h} = Min \left(\begin{matrix}Min \left({\sum }_{i = 1}^{{n}_{i}} \left(\frac{{E}_{max - α _ i} - {E}_{now - α _ i}}{{P}_{er - α _ i}}\right), {\sum }_{i = 1}^{{n}_{i}} \left(\frac{{E}_{now - {α}_{i}} - {E}_{min - α _ i}}{{P}_{er - α _ i}}\right)\right) \\ , Min \left({\sum }_{j = 1}^{{n}_{j}} \left(\frac{{E}_{max - β _ j} - {E}_{now - β _ j}}{{P}_{er - β _ j}}\right), {\sum }_{j = 1}^{{n}_{j}} \left(\frac{{E}_{now - β _ j} - {E}_{min - β _ j}}{{P}_{er - β _ j}}\right)\right)\end{matrix}\right)$ (1) (dans l'Expression (1), tₕ désigne un temps de commande (s) d'un dispositif de conversion d'énergie (52, 62, 64, 66, 68), E_{max-α_i} désigne une limite supérieure de quantité d'énergie stockée (Wh) du i-ème dispositif de stockage d'énergie côté amont (54, 63, 65, 67), E_{min-α_i} désigne une limite inférieure de quantité d'énergie stockée (Wh) du i-ème dispositif de stockage d'énergie côté amont (54, 63, 65, 67), E_{now-α_i} désigne une quantité actuelle d'énergie stockée (Wh) du i-ème dispositif de stockage d'énergie côté amont (54, 63, 65, 67), P_{er-α_i} désigne une différence entre une entrée-sortie estimée et une entrée-sortie actuelle (W) dans et depuis le i-ème dispositif de stockage d'énergie côté amont (54, 63, 65, 67), E_{max-β_j} désigne une limite supérieure de quantité d'énergie stockée (Wh) du j-ème dispositif de stockage d'énergie côté aval (54, 63, 65, 67), E_{min-β_j} désigne une limite inférieure de quantité d'énergie stockée (Wh) du j-ème dispositif de stockage d'énergie côté aval (53, 63, 65, 67), E_{now-β_j} désigne une quantité actuelle d'énergie stockée (Wh) du j-ème dispositif de stockage d'énergie côté aval (53, 63, 65, 67), P_{er-β_j} désigne une différence entre une entrée-sortie estimée et une entrée-sortie actuelle (W) dans et depuis le j-ème dispositif de stockage d'énergie côté aval (53, 63, 65, 67), i et j sont des entiers supérieurs ou égaux à 1, nᵢ désigne un nombre de dispositifs de stockage d'énergie côté amont (52, 62, 64, 66, 68), et nⱼ désigne un nombre de dispositifs de stockage d'énergie côté aval (53, 63, 65, 67).
